# EUROPEAN PATENT APPLICATION

(11) **EP 4 852 550 A1**
(43) Date of publication of application: **09.12.2026**
(21) Application number: 25878652.4
(22) Date of filing: 13.06.2025
(51) Int. Cl.: H04W 68/00

(54) **COMMUNICATION METHOD, COMMUNICATION SYSTEM AND RELATED APPARATUS**

(30) Priority: 18.10.2024 CN 202411464826
(71) Applicant: HUAWEI TECHNOLOGIES CO., LTD., Shenzhen, Guangdong 518129 (CN)
(72) Inventor: QIAN, Feng, Shenzhen, Guangdong 518129 (CN); SHEN, Qiuchen, Shenzhen, Guangdong 518129 (CN); LIN, Lixin, Shenzhen, Guangdong 518129 (CN); LI, Zhenzhou, Shenzhen, Guangdong 518129 (CN)
(74) Representative: Huawei European IPR
(86) International application number: PCT/CN2025/100950
(87) International publication number: WO 2026/081508

(57) **Abstract**

This application discloses a communication method, a communication system, and a related apparatus, so that a network device can send a paging request to a terminal after detecting a communication service for paging the terminal. The network device sends an enhanced paging request to the terminal if a paging response corresponding to the paging request has not been received. The terminal may display a paging prompt in response to the enhanced paging request if the terminal has received the enhanced paging request, where the paging prompt is used to inform a user of arrival of paging for the terminal and to adjust a posture or a use place of the terminal to connect to the network device. The terminal may send, to the network device after detecting a downlink broadcast signal sent by the network device, a paging response corresponding to the enhanced paging request. If the network device has received the paging response corresponding to the enhanced paging request, the network device performs a communication service with the terminal. In this way, when link quality is poor, the user using the terminal can be informed in time of arrival of the communication service, to increase a success rate of paging the terminal by the network device.

## Description

This application claims priority to Chinese Patent Application No. 202411464826.3, filed with the China National Intellectual Property Administration on October 18, 2024 and entitled "COMMUNICATION METHOD, COMMUNICATION SYSTEM, AND RELATED APPARATUS", which is incorporated herein by reference in its entirety.

### TECHNICAL FIELD

This application relates to the field of communication technologies, and in particular, to a communication method, a communication system, and a related apparatus.

### BACKGROUND

In a modern communication system, a terminal needs to successfully receive paging from a network device before receiving an SMS message or a call. However, when quality of an air interface link between the terminal and the network device is poor, it is difficult for the terminal to successfully receive paging signaling sent by the network device. Consequently, a success rate of receiving the SMS message or the call is reduced.

### SUMMARY

This application provides a communication method, a communication system, and a related apparatus, to trigger, by using an enhanced paging request, a terminal to output a paging prompt, to inform a user of arrival of paging for the terminal and to adjust a posture and/or a use place of the terminal, so as to improve quality of a link between the terminal and a network device, so that the terminal can return a paging response to the network device in time, to perform a communication service with the network device.

According to a first aspect, this application provides a communication system, including a terminal and a network device. The network device is configured to send a paging request to the terminal when detecting a communication service for paging the terminal; the network device is further configured to send an enhanced paging request to the terminal if a paging response that corresponds to the paging request and that is sent by the terminal has not been received; the terminal is configured to: output a paging prompt in response to the enhanced paging request after having received the enhanced paging request, where the paging prompt is used to inform a user of arrival of paging for the terminal and to adjust a posture and/or a use place of the terminal to connect to the network device; and the terminal is further configured to send, to the network device after having received a downlink broadcast signal sent by the network device, a paging response corresponding to the enhanced paging request.

Quality of a link required for receiving the enhanced paging request is lower than quality of a link required for receiving the paging request and quality of a link required for receiving the communication service. Therefore, in the communication system of this application, after sending the paging request to the terminal, if the network device has not received, within specified time, the paging response sent by the terminal, the network device may trigger, by using the enhanced paging request, the terminal to display the paging prompt, to inform the user of arrival of paging for the terminal and to adjust the posture and/or the use place of the terminal, so as to improve quality of a link between the terminal and the network device, so that the terminal can return the paging response to the network device in time, to perform the communication service with the network device. In this way, when link quality is poor, the user using the terminal can be informed in time of arrival of the communication service, to increase a success rate of paging the terminal by the network device.

In a possible implementation, sending the enhanced paging request to the terminal if the paging response that corresponds to the paging request and that is sent by the terminal has not been received specifically includes: sending the enhanced paging request to the terminal if the paging response that corresponds to the paging request and that is sent by the terminal has not been received within first preset duration after the paging request is sent to the terminal. In this way, the network device does not need to keep waiting for the paging response corresponding to the paging request.

In a possible implementation, the network device is further configured to perform a communication service with the terminal if the paging response corresponding to the enhanced paging request has been received within second preset duration after the enhanced paging request is sent to the terminal. In this way, the network device does not need to keep waiting for the paging response corresponding to the enhanced paging request.

In a possible implementation, the terminal is further configured to display a satellite alignment page after outputting the paging prompt, where the satellite alignment page includes an alignment prompt, and the alignment prompt is used to prompt the user to adjust the posture of the terminal to be aligned with a communication satellite of the network device. In this way, the user may be guided, by using the satellite alignment page, to adjust the posture of the terminal to be aligned with the communication satellite. This improves a speed of aligning the terminal with the communication satellite by the user.

In a possible implementation, the terminal is further configured to display a navigation page after outputting the paging prompt, where the navigation page includes a map and a navigation guidance prompt, and the navigation guidance prompt is used to prompt the user to take the terminal to an open area; and the terminal is specifically configured to display the satellite alignment page after detecting that the terminal is in the open area. In this way, the user may be first guided to carry the terminal to the open area, and then the terminal is guided to be aligned with the communication satellite, to accelerate a speed of connecting the terminal to the network device.

In a possible implementation, the terminal is further configured to output an adjustment prompt when detecting that the terminal does not perform signaling interaction with the network device within third preset duration, where the adjustment prompt is used by the user to adjust the posture and/or the use place of the terminal to connect to the network device. In this way, the terminal may be connected to a network at intervals, so that the terminal remains in an attached state on the network device for a long time.

In a possible implementation, the terminal is further configured to: after performing the communication service with the network device, output the adjustment prompt if it is detected that a distance by which the terminal moves exceeds a preset distance threshold within a time period in which the terminal does not perform signaling interaction with the network device, where the adjustment prompt is used by the user to adjust the posture and/or the use place of the terminal to connect to the network device. In this way, when the distance by which the terminal moves is excessively large, the network device may update and record a location of the terminal in time.

In a possible implementation, the preset distance threshold is a maximum straight-line distance within coverage of one satellite beam of the network device; or the preset distance threshold is a maximum straight-line distance within coverage of one cell of the network device. In this way, when the terminal moves to another satellite beam or another cell, the network device can update the location of the terminal in time, so that the paging request or the enhanced paging request can be sent to the terminal in the satellite beam or the cell in which the terminal is located, to increase a probability of successfully receiving the paging request or the enhanced paging request by the terminal.

In a possible implementation, the terminal is further configured to: after outputting the adjustment prompt, initiate an attach procedure to the network device if the downlink broadcast signal sent by the network device is detected. Because the downlink broadcast signal sent by the network device has been received, it indicates that quality of an air interface link between the terminal and the network device is improved to a level at which normal communication can be performed. Therefore, after the terminal detects the downlink broadcast signal, the terminal may complete the attach procedure with the network device in time.

In a possible implementation, the network device is further configured to: after completing the attach procedure with the terminal, reset an implicit detach timer and update and record the location of the terminal, where the third preset duration is less than timeout duration of the implicit detach timer, the implicit detach timer is used by the network device to record duration in which the terminal does not perform signaling interaction with the network device, and the network device marks the terminal as being in an unattached state if the implicit detach timer expires. In this way, the terminal can be kept in the attached state, and the network device can learn of a latest location of the terminal, so that paging signaling such as the paging request or the enhanced paging request can be accurately sent to the terminal.

In a possible implementation, the terminal is further configured to: before receiving the enhanced paging request sent by the network device, when successfully finding a synchronization signal on a frequency correction channel FCCH at a predetermined frequency, complete time and frequency synchronization by using the synchronization signal, and record an initial frame header edge moment of the enhanced paging request and initial receiving frequency of the enhanced paging request; and receiving the enhanced paging request sent by the network device specifically includes: performing positioning on the terminal by using a received navigation signal, to determine location information of the terminal, precise positioning timing, and a pulse per second 1PPS signal; determining a propagation delay of the enhanced paging request and a Doppler frequency shift of the enhanced paging request based on the location information of the terminal and location information of the network device; determining a crystal oscillator time domain offset of the communication service and a crystal oscillator frequency domain offset of the communication service based on the 1PPS signal and the precise positioning timing; correcting the initial frame header edge moment of the enhanced paging request based on the propagation delay of the enhanced paging request and the crystal oscillator time domain offset of the communication service, to obtain a corrected frame header edge moment of the enhanced paging request; correcting the initial receiving frequency of the enhanced paging request based on the Doppler frequency shift of the enhanced paging request and the crystal oscillator frequency domain offset of the communication service, to obtain a corrected receiving frequency of the enhanced paging request; and demodulating the enhanced paging request from a basic alerting channel based on the corrected frame header edge moment of the enhanced paging request and the corrected receiving frequency of the enhanced paging request.

In this way, the location of the terminal, the 1PPS signal, the precise timing, and a location of the network device that are output by a positioning system inside the terminal can be used to maintain synchronization between time and frequency of the communication service on the terminal and time and frequency of the network device, so that the terminal can receive, at accurate time and frequency, a downlink signal sent by the network device, to increase the probability of successfully receiving, by the terminal, the enhanced paging request or the paging request sent by the network device, and increase the success rate of paging the terminal by the network device.

In a possible implementation, demodulating the enhanced paging request from the basic alerting channel specifically includes: generating an enhanced paging request sample based on a temporary international mobile subscriber identity TMSI of the terminal and a content format of the enhanced paging request; performing spreading, modulation, and encoding on the enhanced paging request sample to generate a symbol sequence of the enhanced paging request sample; receiving a plurality of symbols on the basic alerting channel, where a quantity of the plurality of symbols is the same as a quantity of symbols in the symbol sequence of the enhanced paging request sample; splicing the plurality of symbols into a data block in a receiving-time order; and jointly demodulating the enhanced paging request from the data block based on the symbol sequence corresponding to the enhanced paging request sample. In this way, a success rate of successfully receiving the enhanced paging request by the terminal can be increased.

According to a second aspect, this application provides a communication method, applied to a terminal and including: receiving an enhanced paging request sent by a network device; outputting a paging prompt in response to the enhanced paging request, where the paging prompt is used to inform a user of arrival of paging for the terminal and to adjust a posture or a use place of the terminal to connect to the network device; and sending a paging response to the network device after having received a downlink broadcast signal sent by the network device.

In a possible implementation, after sending the paging response to the network device, the method further includes: performing a communication service with the network device, where the communication service includes a call service or an SMS message service.

In a possible implementation, after outputting the paging prompt, the method further includes: displaying a satellite alignment page, where the satellite alignment page includes an alignment prompt, and the alignment prompt is used to prompt the user to adjust the posture of the terminal to be aligned with a communication satellite of the network device.

In a possible implementation, after outputting the paging prompt, the method further includes: displaying a navigation page, where the navigation page includes a map and a navigation guidance prompt, and the navigation guidance prompt is used to prompt the user to take the terminal to an open area; and displaying the satellite alignment page specifically includes: displaying the satellite alignment page after detecting that the terminal is in the open area.

In a possible implementation, after performing the communication service with the network device, the method further includes: outputting an adjustment prompt when detecting that the terminal does not perform signaling interaction with the network device within third preset duration, where the adjustment prompt is used by the user to adjust the posture and/or the use place of the terminal to connect to the network device, the third preset duration is less than timeout duration of an implicit detach timer, the implicit detach timer is used by the network device to record duration in which the terminal does not perform signaling interaction with the network device, and the network device marks the terminal as being in an unattached state if the implicit detach timer expires.

In a possible implementation, after performing the communication service with the network device, the method further includes: outputting the adjustment prompt if it is detected that a distance by which the terminal moves exceeds a preset distance threshold within a time period in which the terminal does not perform signaling interaction with the network device, where the adjustment prompt is used by the user to adjust the posture and/or the use place of the terminal to connect to the network device.

In a possible implementation, the preset distance threshold is a maximum straight-line distance within coverage of one satellite beam of the network device; or the preset distance threshold is a maximum straight-line distance within coverage of one cell of the network device.

In a possible implementation, after outputting the adjustment prompt, the method further includes: initiating an attach procedure to the network device after having received the downlink broadcast signal sent by the network device.

In a possible implementation, before receiving the enhanced paging request sent by the network device, the method further includes: when successfully finding a synchronization signal on a frequency correction channel FCCH at a predetermined frequency, completing time and frequency synchronization by using the synchronization signal, and recording an initial frame header edge moment of the enhanced paging request and initial receiving frequency of the enhanced paging request; and receiving the enhanced paging request sent by the network device specifically includes: performing positioning on the terminal by using a received navigation signal, to determine location information of the terminal, precise positioning timing, and a pulse per second 1PPS signal; determining a propagation delay of the enhanced paging request and a Doppler frequency shift of the enhanced paging request based on the location information of the terminal and location information of the network device; determining a crystal oscillator time domain offset of the communication service and a crystal oscillator frequency domain offset of the communication service based on the 1PPS signal and the precise positioning timing; correcting the initial frame header edge moment of the enhanced paging request based on the propagation delay of the enhanced paging request and the crystal oscillator time domain offset of the communication service, to obtain a corrected frame header edge moment of the enhanced paging request; correcting the initial receiving frequency of the enhanced paging request based on the Doppler frequency shift of the enhanced paging request and the crystal oscillator frequency domain offset of the communication service, to obtain a corrected receiving frequency of the enhanced paging request; and demodulating the enhanced paging request from a basic alerting channel based on the corrected frame header edge moment of the enhanced paging request and the corrected receiving frequency of the enhanced paging request.

In a possible implementation, demodulating the enhanced paging request from the basic alerting channel specifically includes: generating an enhanced paging request sample based on a temporary international mobile subscriber identity TMSI of the terminal and a content format of the enhanced paging request; performing spreading, modulation, and encoding on the enhanced paging request sample to generate a symbol sequence of the enhanced paging request sample; receiving a plurality of symbols on the basic alerting channel, where a quantity of the plurality of symbols is the same as a quantity of symbols in the symbol sequence of the enhanced paging request sample; splicing the plurality of symbols into a data block in a receiving-time order; and jointly demodulating the enhanced paging request from the data block based on the symbol sequence corresponding to the enhanced paging request sample.

According to a third aspect, this application provides a terminal, including one or more processors, one or more memories, and a transceiver. The one or more memories and the transceiver are coupled to the one or more processors, the transceiver is configured to send or receive signaling, the one or more memories are configured to store a computer program, and when the one or more processors execute the computer program, the communication method in any possible implementation of any one of the foregoing aspects is performed.

According to a fourth aspect, an embodiment of this application provides a computer-readable storage medium, the computer-readable storage medium stores a computer program, and when the computer program is run on a processor, the communication method in any possible implementation of any one of the foregoing aspects is implemented.

According to a fifth aspect, an embodiment of this application provides a computer program product, including a computer program. When the computer program is run on a processor, the communication method in any possible implementation of any one of the foregoing aspects is implemented.

According to a sixth aspect, an embodiment of this application provides a chip system, including a processing circuit and an interface circuit. The interface circuit is configured to: receive code instructions and transmit the code instructions to the processing circuit, and the processing circuit is configured to run the code instructions to perform and implement the communication method in any possible implementation of any one of the foregoing aspects.

For beneficial effects of the second aspect to the sixth aspect, refer to the beneficial effects in any one of the first aspect and the possible implementations of the first aspect. Details are not described herein again.

### BRIEF DESCRIPTION OF DRAWINGS

FIG. 1 is a diagram of an architecture of a communication system according to an embodiment of this application;
FIG. 2 is a diagram of a structure of a terminal according to an embodiment of this application;
FIG. 3 is a diagram of a paging procedure according to an embodiment of this application;
FIG. 4 is a schematic flowchart of a communication method according to an embodiment of this application;
FIG. 5A to FIG. 5K are diagrams of a group of interfaces according to an embodiment of this application;
FIG. 6A and FIG. 6B are a schematic flowchart of a communication method according to another embodiment of this application;
FIG. 7A to FIG. 7D are diagrams of another group of interfaces according to an embodiment of this application;
FIG. 8 is a diagram of a subcarrier on a BACH channel according to an embodiment of this application;
FIG. 9 is a diagram of a frame format for signal transmission on a BACH channel according to an embodiment of this application;
FIG. 10 is a diagram of an architecture of a chip system according to an embodiment of this application;
FIG. 11A and FIG. 11B are a diagram of a time and frequency synchronization procedure of a communication method according to an embodiment of this application;
FIG. 12 is a diagram of a content format of an enhanced paging request according to an embodiment of this application;
FIG. 13 is a diagram of joint demodulation results of sequences of different lengths according to an embodiment of this application;
FIG. 14 is a diagram of a structure of a communication apparatus according to an embodiment of this application;
FIG. 15 is a diagram of a structure of another communication apparatus according to an embodiment of this application;
FIG. 16 is a diagram of a structure of another communication apparatus according to another embodiment of this application; and
FIG. 17 is a diagram of a structure of another communication apparatus according to another embodiment of this application.

### DESCRIPTION OF EMBODIMENTS

The following clearly and completely describes the technical solutions in embodiments of this application with reference to the accompanying drawings. In descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more.

The following describes a communication system 10 according to an embodiment of this application.

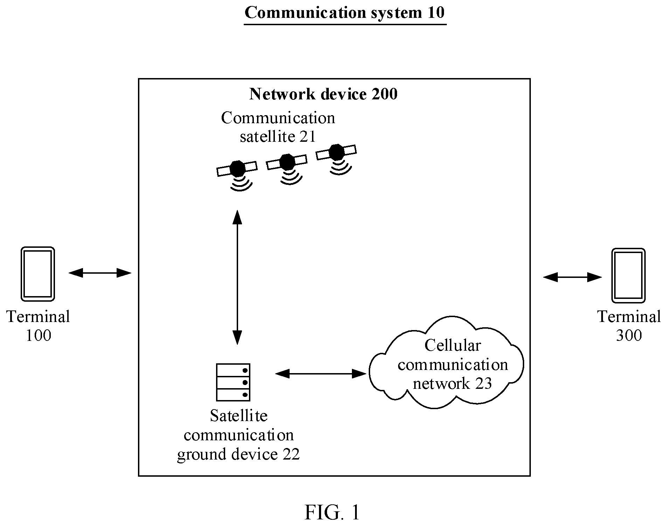

FIG. 1 is a diagram of an architecture of the communication system 10 according to an embodiment of this application.

As shown in FIG. 1, the communication system 10 may include a terminal 100, a network device 200, and a terminal 300. In a possible implementation, the network device 200 may be a device in a satellite network. If the network device 200 is a device in a satellite network, the network device 200 may include a communication satellite 21, a satellite communication ground device 22, a cellular communication network 23, and the like. The terminal 100 may receive or send signaling through the communication satellite 21, to perform communication services such as a call and an SMS message with the terminal 300 through the communication satellite 21, the satellite communication ground device 22, and the cellular communication network 23. The terminal 300 may receive or send signaling through the communication satellite 21, or may receive or send signaling through the cellular communication network 23.

The terminal 100 may send signaling to the communication satellite 21. The communication satellite 21 performs only relay, and directly forwards, to the satellite communication ground device 22 on the ground, the signaling sent by the terminal 100. The satellite communication ground device 22 may send, to the terminal 300 through the cellular communication network 23, the signaling forwarded by the communication satellite 21. The terminal 300 may alternatively send the signaling to the satellite communication ground device 22 through a cellular communication network. The satellite communication ground device 22 may send, to the terminal 100 through relay of the communication satellite 21, the signaling sent by the terminal 300. Optionally, the terminal 300 may further send the signaling to the satellite communication ground device 22 through the communication satellite 21, and the satellite communication ground device 22 may forward, to the terminal 100 through the communication satellite 21, the signaling sent by the terminal 300.

In a possible implementation, the network device 200 may be a device in the cellular communication network 23. The cellular communication network 23 may include any one of a 2G network, a 3G network, a 4G network, a 5G network, a 6G network, or the like. The terminal 100 may perform a communication service like a call or an SMS message with the terminal 300 through the cellular communication network 23.

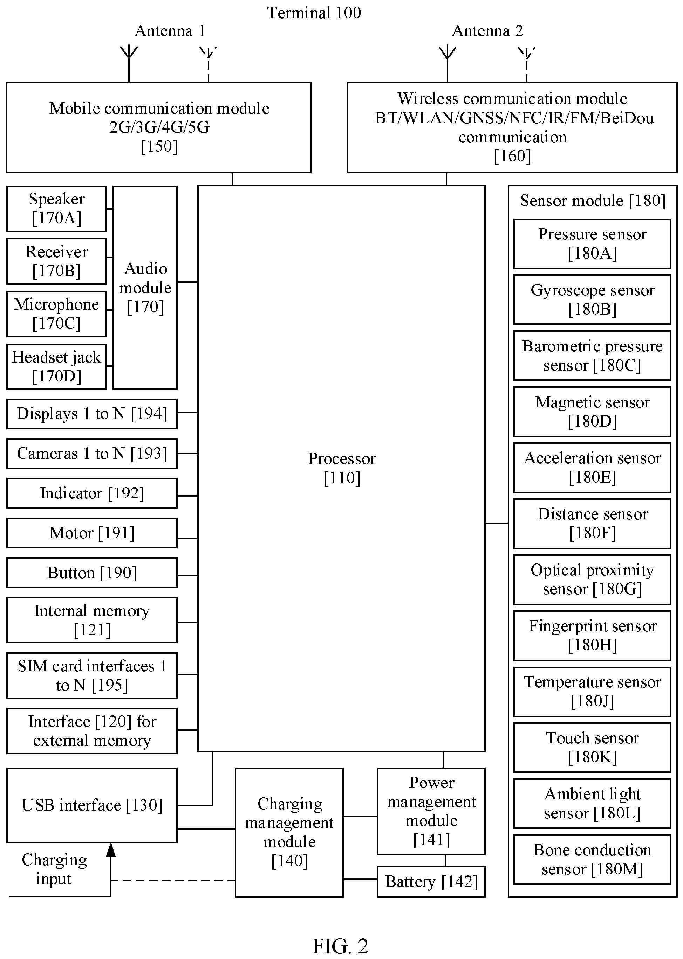

FIG. 2 is a diagram of a structure of the terminal 100.

The following specifically describes embodiments by using the terminal 100 as an example. It should be understood that the terminal 100 shown in FIG. 2 is merely an example. The terminal 100 may have more or fewer components than those shown in FIG. 2, or two or more components may be combined, or a different component configuration may be used. Various components shown in FIG. 2 may be implemented in hardware including one or more signal processing and/or application-specific integrated circuits, software, or a combination of hardware and software.

The terminal 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that an illustrated structure in this embodiment of the present invention does not constitute a specific limitation on the terminal 100. In some other embodiments of this application, the terminal 100 may include more or fewer components than those shown in the figure, or some components may be combined, or some components may be split, or there may be different component arrangements. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the terminal 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that the interface connection relationship between the modules illustrated in this embodiment of the present invention is merely an example for description, and does not constitute a limitation on the structure of the terminal 100. In some other embodiments of this application, the terminal 100 may alternatively use an interface connection manner different from that in the foregoing embodiment, or may use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the terminal 100. The charging management module 140 may supply power to the terminal 100 through the power management module 141 while charging the battery 142.

The power management module 141 is configured to connect to the battery 142, the charging management module 140, and the processor 110. The power management module 141 receives an input of the battery 142 and/or the charging management module 140, to supply power to the processor 110, the internal memory 121, the external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the terminal 100 may be implemented through the antenna 1, the antenna 2, the mobile communication module 150, the wireless communication module 160, the modem processor, the baseband processor, and the like.

The antenna 1 and the antenna 2 are configured to: transmit and receive an electromagnetic wave signal. Each antenna in the terminal 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the terminal 100 The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least a part of functional modules of the mobile communication module 150 may be disposed in the processor 110. In some embodiments, at least a part of functional modules of the mobile communication module 150 may be disposed in a same component as at least a part of modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution that is applied to the terminal 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the terminal 100, the antenna 1 is coupled to the mobile communication module 150, and the antenna 2 is coupled to the wireless communication module 160, so that the terminal 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like.

The terminal 100 implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD). The display panel may alternatively be manufactured by using an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the terminal 100 may include one or N displays 194, where N is a positive integer greater than 1.

The terminal 100 may implement an image shooting function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and a color temperature of an image shooting scenario. In some embodiments, the ISP may be disposed in the camera 193.

The camera 193 is configured to capture a static image or a video. An optical image of an object is generated through the lens, and is projected onto the photosensitive element. The ISP outputs the digital image signal to the DSP for processing. The DSP converts the digital image signal into an image signal in a standard format like RGB or YUV. In some embodiments, the terminal 100 may include one or N cameras 193, where N is a positive integer greater than 1.

The digital signal processor is configured to process a digital signal, and may process another digital signal in addition to a digital image signal. For example, when the terminal 100 selects a frequency, the digital signal processor is configured to perform Fourier transformation on frequency energy.

The video codec is configured to compress or decompress a digital video. The terminal 100 may support one or more video codecs. In this way, the terminal 100 can play or record videos in various encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transmission mode between human brain neurons, and may further continuously perform self-learning.

The interface 120 for external memory may be configured to connect an external storage card, for example, a Micro SD card, to expand a storage capability of the terminal 100. The external storage card communicates with the processor 110 through the interface 120 for external memory, to implement a data storage function.

The internal memory 121 may be configured to store computer-executable program code. The executable program code includes instructions. The processor 110 runs the instructions stored in the internal memory 121, to implement various function applications and data processing of the terminal 100. The internal memory 121 may include a program storage area and a data storage area. The program storage area may store an operating system, an application required by at least one function (for example, a voice playing function or an image playing function), and the like. The data storage area may store data (for example, audio data or a phone book) created when the terminal 100 is used. In addition, the internal memory 121 may include a high-speed random access memory, or may include a nonvolatile memory, for example, at least one magnetic disk storage component, a flash memory, or a universal flash storage (universal flash storage, UFS).

The terminal 100 may implement an audio function through the audio module 170, the speaker 170A, the receiver 170B, the microphone 170C, the headset jack 170D, the application processor, or the like. The audio module 170 is configured to convert digital audio information into an analog audio signal for output, and is also configured to convert an analog audio input into a digital audio signal. The speaker 170A, also referred to as a "loudspeaker", is configured to convert an audio electrical signal into a sound signal. The receiver 170B, also referred to as an "earpiece", is configured to convert an electrical audio signal into a sound signal. The microphone 170C, also referred to as a "mike" or a "mic", is configured to convert a sound signal into an electrical signal. The headset jack 170D is configured to connect to a wired headset. The headset jack 170D may be the USB interface 130. The pressure sensor 180A is configured to sense a pressure signal, and can convert the pressure signal into an electrical signal. In some embodiments, the pressure sensor 180A may be disposed on the display 194. The gyroscope sensor 180B may be configured to determine a motion posture of the terminal 100. The barometric pressure sensor 180C is configured to measure barometric pressure. The magnetic sensor 180D includes a Hall sensor. The acceleration sensor 180E may detect magnitudes of accelerations of the terminal 100 in various directions (usually on three axes). The distance sensor 180F is configured to measure a distance. The terminal 100 may measure the distance in an infrared manner or a laser manner. The optical proximity sensor 180G may include, for example, a light-emitting diode (LED) and an optical detector, for example, a photodiode. The fingerprint sensor 180H is configured to collect a fingerprint. The temperature sensor 180J is configured to detect a temperature. The touch sensor 180K is also referred to as a "touch panel". The touch sensor 180K may be disposed on the display 194. A touchscreen formed by the touch sensor 180K and the display 194 is also referred to as a "touch screen". The bone conduction sensor 180M may obtain a vibration signal. The button 190 includes a power button, a volume button, and the like. The motor 191 may generate a vibration prompt. The indicator 192 may be an indicator light, and may be configured to indicate a charging status and a power change, or may be configured to indicate a message, a missed call, a notification, and the like. The SIM card interface 195 is configured to connect to a SIM card. In some embodiments, the terminal 100 uses an eSIM, namely, an embedded SIM card. The eSIM card may be embedded in the terminal 100, and cannot be separated from the terminal 100.

In this embodiment of this application, for a structure of the terminal 300, refer to the structure of the terminal 100 shown in FIG. 2. Details are not described herein again. The terminal 300 may be a device that supports satellite communication, or may be a device that does not support satellite communication.

The following describes a paging procedure according to an embodiment of this application.

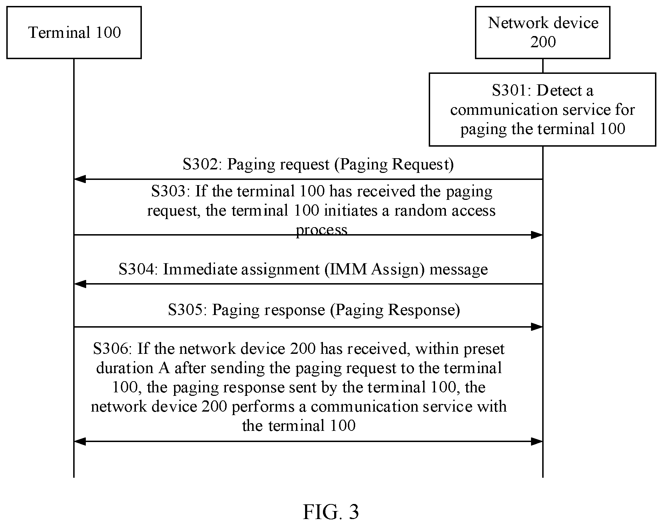

FIG. 3 is a diagram of a paging procedure according to an embodiment of this application.

As shown in FIG. 3, the paging procedure may be applied to a communication system including a terminal 100 and a network device 200. The paging procedure may include the following steps.

S301: The network device 200 detects a communication service for paging the terminal 100.

The communication service may include a call service and an SMS message service that are initiated by a terminal 300 to the terminal 100 through the network device 200.

S302: The network device 200 sends a paging request (Paging Request) to the terminal 100.

The network device 200 may send the paging request to the terminal 100 on a paging control channel (paging control channel, PCCH).

S303: If the terminal 100 has received the paging request, the terminal 100 may initiate a random access process to the network device 200.

After having received the paging request, the terminal 100 may first send a channel request (Channel Request) on a random access channel (random access channel, RACH).

After having received the channel request (Channel Request), the network device 200 may configure stand-alone dedicated control channel (stand-alone dedicated control channel, SDCCH) resources for the terminal 100. An SDCCH is used to transmit system signaling in processes such as call setup, authentication, location update, allocation of a service channel (for example, a traffic channel (traffic channel, TCH) or a packet data channel (packet data channel, PDCH)), and SMS message transmission between the terminal 100 and the network device 200. The traffic channel may be used to transmit services such as a voice, a fax, an SMS message, an email, and data.

S304: The network device 200 sends an immediate assignment (immediate assignment, IMM Assign) message to the terminal 100.

After configuring the SDCCH resources for the terminal 100, the network device 200 may send the IMM Assign message to the terminal 100 on an access grant channel (access grant channel, AGCH). The IMM Assign message is used to indicate the terminal 100 to switch from the AGCH to the SDCCH. The IMM Assign message may carry one or more of a paging mode, description information of the SDCCH, description information of a slow association control channel (slow association control channel, SACCH), frequency hopping information (including a parameter request reference, an initial timing advance, and frequency allocation), or the like. The SACCH is used to transmit scheduling and management information. For example, the SACCH may be used to send a measurement report, perform power control, perform time calibration, send an SMS message, or the like.

After the network device 200 sends the IMM Assign message to the terminal 100, the terminal 100 may set up a radio resource control (radio resource control, RRC) connection to the network device 200.

S305: The terminal 100 sends a paging response (Paging Response) to the network device 200.

The terminal 100 may send a set asynchronous balanced mode (set asynchronous balanced mode, SABM) frame to the network device 200, where the SABM frame includes the paging response.

S306: If the network device 200 has received, within preset duration A after sending the paging request to the terminal 100, the paging response sent by the terminal 100, the network device 200 performs a communication service with the terminal 100.

The communication service may include a call service and an SMS message service.

If the network device 200 has received, within the preset duration A after sending the paging request (Paging Request) to the terminal 100, the paging response sent by the terminal 100, the network device 200 may first perform an authentication and identity verification process on the terminal 100. After completing the authentication and identity verification process, the network device 200 may perform the communication service with the terminal 100.

If the network device 200 has not received, within first preset duration after sending the paging request (Paging Request) to the terminal 100, the paging response sent by the terminal 100, the network device 200 ends the paging procedure with the terminal 100.

In a possible implementation, if the network device 200 has not received, within the preset duration A after sending the paging to the terminal 100, the paging response sent by the terminal 100, the network device 200 may wait for a period of time and then resend the paging request to the terminal 100. If the network device 200 has not yet received, within the first preset duration after repeatedly sending the paging request to the terminal 100 a plurality of times (for example, three times), the paging response sent by the terminal 100, the network device 200 may end the paging procedure with the terminal 100, and broadcast, to the terminal 300, a prompt indicating that the subscriber is out of service.

It can be learned from the foregoing paging procedure that, if quality of an air interface link between the terminal 100 and the network device 200 is poor, it is difficult for the terminal 100 to normally receive the paging request sent by the network device 200 to the terminal 100. For example, if the network device 200 is a device in a cellular communication network 23, and the terminal 100 is in a garage with a weak signal, the terminal 100 cannot successfully receive the paging request sent by the network device 200. For another example, if the network device 200 is a device in a satellite communication network, and the terminal 100 is in a scenario like a forest with an obstruction or a backpack of a user, a satellite link budget between the terminal 100 and the network device 200 is poor, and the terminal 100 cannot successfully receive the paging request sent by the network device 200 through a communication satellite 21. In this case, the network device 200 cannot successfully receive, in time, the paging response sent by the terminal 100, resulting in a reduction in a success rate of paging the terminal 100.

Therefore, this embodiment of this application provides a communication method, so that the network device 200 can send the paging request (Paging Request) to the terminal 100 after detecting the communication service for paging the terminal 100. If the network device 200 has not received the paging response corresponding to the paging request, the network device 200 sends an enhanced paging request (which may also be referred to as an alert request (Alert Request)) to the terminal 100. If the terminal 100 has received the enhanced paging request, the terminal 100 may display a paging prompt in response to the enhanced paging request, where the paging prompt is used to inform a user of arrival of paging for the terminal 100 and to adjust a posture or a use place of the terminal 100 to connect to the network device 200. After detecting a downlink broadcast signal sent by the network device 200, the terminal 100 may send a paging response (Paging Response) to the network device 200. If the network device 200 has received the paging response corresponding to the enhanced paging request, the network device 200 performs a communication service with the terminal 100.

Specifically, if the network device 200 has not received, within the first preset duration after sending the paging request to the terminal 100, the paging response sent by the terminal 100, the network device 200 sends the enhanced paging request (Alert Request) to the terminal 100. If the network device 200 has received, within second preset duration after sending the enhanced paging request to the terminal 100, the paging response sent by the terminal 100, the network device 200 performs the communication service with the terminal 100.

Any paging response that has been received by the network device 200 from the terminal 100 within the first preset duration after the network device 200 sends the paging request to the terminal 100 can be considered as the paging response corresponding to the paging request. Any paging response that has been received by the network device 200 from the terminal 100 within the second preset duration after the network device 200 sends the enhanced paging request to the terminal 100 can be considered as the paging response corresponding to the enhanced paging request.

Quality of a link required for receiving the enhanced paging request is lower than quality of a link required for receiving the paging request and quality of a link required for receiving the communication service. Therefore, after sending the paging request to the terminal 100, if the network device 200 has not received, within specified time, the paging response sent by the terminal 100, the network device 200 may trigger, by using the enhanced paging request, the terminal 100 to display the paging prompt, to inform the user of arrival of paging for the terminal 100 and to adjust the posture and/or the use place of the terminal 100, so as to improve quality of a link between the terminal 100 and the network device 200, so that the terminal 100 can return the paging response to the network device 200 in time, to perform the communication service with the network device 200. In this way, when link quality is poor, the user using the terminal 100 can be informed in time of arrival of the communication service, to increase the success rate of paging the terminal 100 by the network device 200.

The following describes a communication method according to an embodiment of this application.

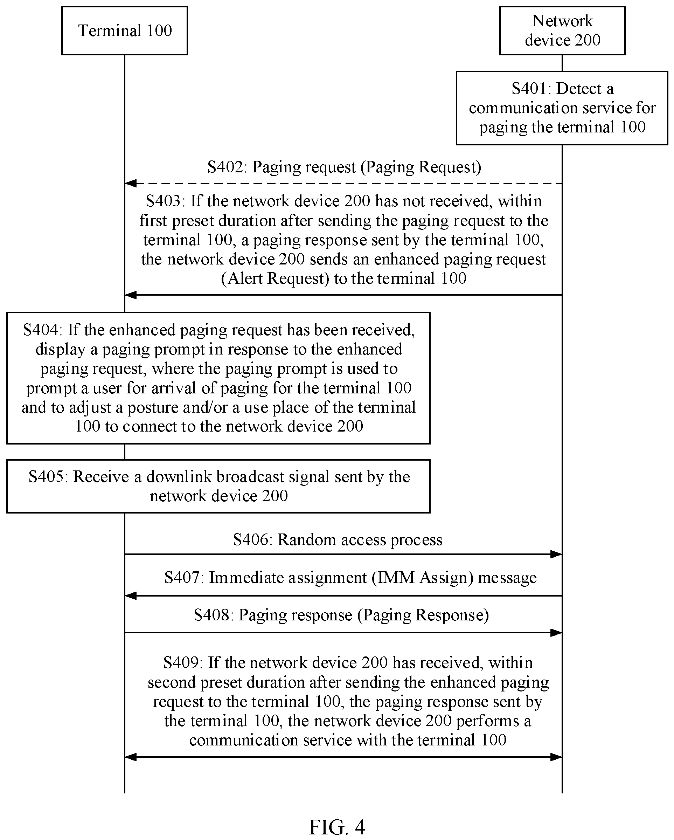

FIG. 4 is a schematic flowchart of the communication method according to this embodiment of this application.

As shown in FIG. 4, the communication method may include the following steps.

S401: A network device 200 detects a communication service for paging a terminal 100.

The communication service may include a call service and an SMS message service that are initiated by a terminal 300 to the terminal 100 through the network device 200.

S402: The network device 200 sends a paging request (Paging Request) to the terminal 100.

The network device 200 may send the paging request to the terminal 100 on a paging control channel (PCCH).

S403: If the network device 200 has not received, within first preset duration after sending the paging request to the terminal 100, a paging response sent by the terminal 100, the network device 200 sends an enhanced paging request (Alert Request) to the terminal 100.

The network device 200 may send the enhanced paging request (Alert Request) to the terminal 100 on a basic alerting channel (basic alerting channel, BACH). The enhanced paging request on the BACH is transmitted with higher power and more coding gains than the paging request on the PCCH. Therefore, a demodulation threshold of the terminal 100 on the BACH is lower than a demodulation threshold of the terminal 100 on the PCCH. In this way, when quality of an air interface link between the terminal 100 and the network device 200 is poor, even if the terminal 100 cannot receive the paging request (Paging Request) on the PCCH, the terminal 100 may successfully receive the enhanced paging request (Alert Request) on the BACH.

For example, the network device 200 may start a T3113 timer after sending the paging request to the terminal 100. Timeout duration of the T3113 timer is the first preset duration. If the network device 200 has not received, after the T3113 timer expires, the paging response sent by the terminal 100, the network device 200 may send the enhanced paging request (Alert Request) to the terminal 100.

In embodiments of this application, the enhanced paging request may be referred to as an alert request.

S404: If the terminal 100 has received the enhanced paging request, the terminal 100 outputs a paging prompt in response to the enhanced paging request, where the paging prompt is used to prompt a user of arrival of paging for the terminal 100 and to adjust a posture and/or a use place of the terminal 100 to connect to the network device 200.

A type of the paging prompt may include any one or more of a text prompt, an image prompt, a video prompt, a vibration prompt, a sound prompt, or the like.

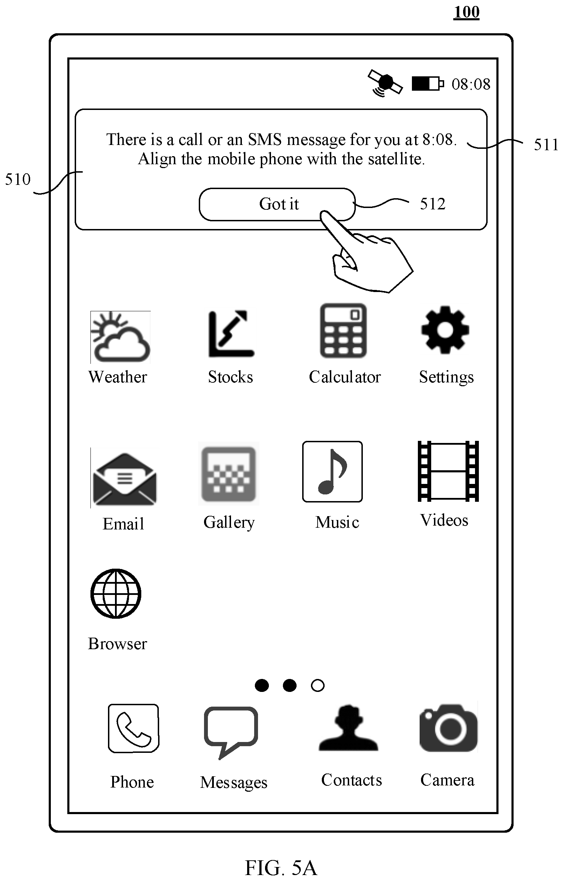

For example, as shown in FIG. 5A, if the terminal 100 has received an enhanced paging request (Alert Request) sent by the network device 200 through a satellite link, the terminal 100 may display a prompt box 510. The prompt box 510 may include a paging prompt 511 and a control 512. The paging prompt 511 may be used to inform the user of arrival of paging for the terminal 100 and to adjust the posture of the terminal 100 to connect to the network device 200. For example, the paging prompt 511 may be "There is a call or an SMS message for you at 8:08. Align the mobile phone with the satellite". Optionally, after having received the enhanced paging request (Alert Request) sent by the network device 200 through the satellite link, the terminal 100 may further output a specified vibration prompt and a specified sound prompt.

The terminal 100 may successfully receive an input of the user on the control 512. In response to the input of the user on the control 512, the terminal 100 may display a satellite alignment page.

In a possible implementation, if the terminal 100 has received the enhanced paging request sent by the network device 200 through the satellite link, the terminal 100 may display the satellite alignment page after displaying the paging prompt. The satellite alignment page includes an alignment prompt, and the alignment prompt may be used to prompt the user to adjust the posture of the terminal 100 to be aligned with a communication satellite 21 of the network device 200. In an example, the alignment prompt may include an alignment text prompt and/or an alignment image prompt. The alignment text prompt may be used to prompt, in a text form, the user to adjust the posture of the terminal 100 to be aligned with the communication satellite of the network device. The alignment image prompt may be used to prompt, in an image form, the user to adjust the terminal 100.

The alignment image prompt may include a first satellite icon and a first area, and the alignment text prompt may include first prompt information.

In an example, the terminal 100 may display a first interface after displaying the paging prompt. The first interface includes that the first satellite icon is not aligned with the first area, and the first prompt information is used to indicate the user to rotate the terminal in a first direction to move the first satellite icon to a location aligned with the first area. When the terminal 100 displays the first interface, the terminal 100 may receive a first input for adjusting the posture of the terminal 100, where the first input includes an input for rotating the terminal 100 in the first direction. In response to the first input, the terminal 100 may display a second interface. The second interface includes the first satellite icon and the first area, and the first satellite icon is aligned with the first area in the second interface. The terminal 100 displays second prompt information, where the second prompt information indicates that the terminal 100 is aligned with the communication satellite 21 of the network device 200. For example, the first interface may be a satellite alignment page displayed when the terminal 100 is not aligned with the communication satellite 21 of the network device 200, and the second interface may be a satellite alignment page displayed when the terminal 100 is aligned with the communication satellite 21 of the network device 200.

Optionally, after the terminal 100 is aligned with the communication satellite 21 of the network device 200, the terminal 100 may display third prompt information, where the third prompt information may be used to prompt the user to maintain the posture of the terminal 100.

Optionally, a color of the first area in the first interface is different from a color of the first area in the second interface.

Optionally, the first area may be used to indicate that a radiation direction of a satellite antenna of the terminal points to the top of the terminal 100.

Optionally, a size of the first area in a second direction gradually increases in the first direction. The first direction is a direction from the bottom of the terminal to the top of the terminal, and the second direction is parallel to a screen of the terminal, and is perpendicular to the first direction.

Optionally, the first area may be an annular sector area. The annular sector area is an annular sector area between a first circle and a second circle. The first circle and the second circle are concentric circles. A radius of the first circle is less than a radius of the second circle. The annular sector area includes a first arc and a second arc. A length of the first arc is greater than a length of the second arc. A direction from the second arc to the first arc is the direction from the bottom of the terminal to the top of the terminal.

Optionally, a second area is an area between the first circle and the second circle except the annular sector area. When the first satellite icon is not aligned with the first area, colors of the first area and the second area are different.

Optionally, a location of the first area in the first interface is the same as a location of the first area in the second interface, and a location of the first satellite icon in the first interface is different from a location of the first satellite icon in the second interface.

Optionally, an opening of a central angle of the annular sector area faces the top of the terminal.

Optionally, the location of the first area in the first interface is the same as the location of the first area in the second interface, and the location of the first satellite icon in the first interface is different from the location of the first satellite icon in the second interface.

Optionally, the opening of the central angle of the annular sector area faces the top of the terminal.

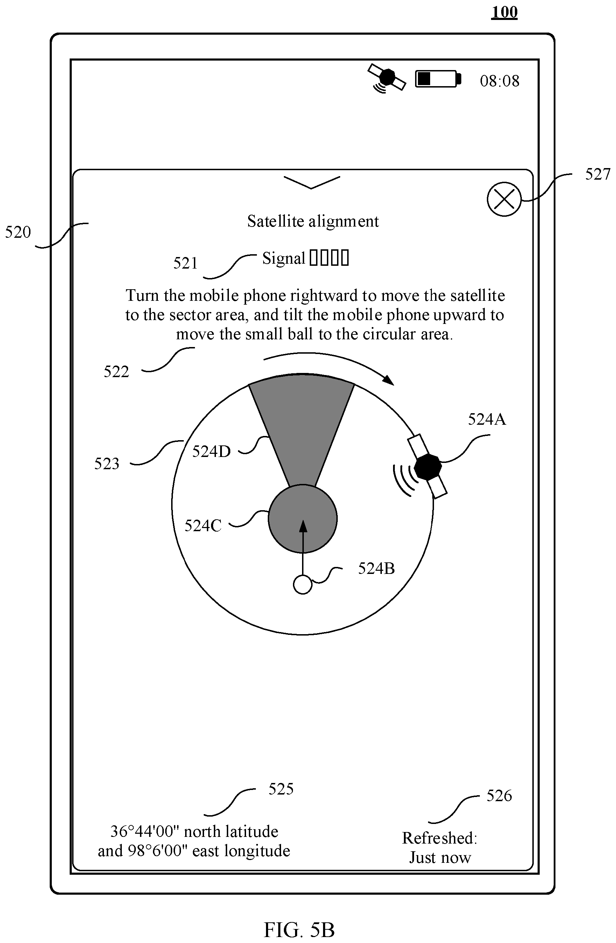

FIG. 5B to FIG. 5E illustrate a process in which the terminal 100 is aligned with a satellite.

For example, as shown in FIG. 5B, the terminal 100 may display a satellite alignment page 520. The satellite alignment page 520 may include a satellite signal strength indicator 521, an alignment text prompt, an alignment image prompt 523, and a close control 527. The satellite signal strength indicator 521 may indicate signal strength of a downlink broadcast signal that is sent by the network device 200 on a broadcast control channel (broadcast control channel, BCCH) of a satellite link and that has been received by the terminal 100. Because the terminal 100 is not aligned with the communication satellite 21, the terminal 100 cannot successfully receive the downlink broadcast signal sent by the network device 200. Therefore, in FIG. 5B, the signal strength of the downlink broadcast signal indicated by the satellite signal strength indicator 521 is 0. For example, the satellite signal strength indicator 521 may display four hollow signal bars. A smaller quantity of hollow signal bars indicates higher signal strength. The alignment text prompt may be used to prompt, in a text form, the user to adjust the posture of the terminal 100 to be aligned with the communication satellite 21 of the network device 200. The alignment image prompt 523 may be used to guide, in an image form, the user to adjust the posture of the terminal 100, so that the terminal 100 is aligned with the communication satellite 21 of the network device 200. The alignment image prompt 523 may include a location icon 524A corresponding to the communication satellite 21, a location icon 524B corresponding to the terminal 100, a pitch angle alignment area 524C, and a horizontal alignment area 524D. Optionally, the satellite alignment page 520 may further include location information 525 of the terminal 100 (for example, "36°44'00" north latitude and 98°6'00" east longitude") and obtaining time (for example, "Just now") of the location information 525 of the terminal 100.

The horizontal alignment area 524D indicates a horizontal alignment direction of the terminal 100. A shape of the horizontal alignment area 524D may be a sector area. It should be noted that the shape of the horizontal alignment area 524D is not limited to the sector area, and may alternatively be an annular sector area, a triangular area, or the like. This is not limited. Optionally, the horizontal alignment direction of the terminal 100 may include a direction of a maximum gain direction of a satellite antenna of the terminal 100 on a horizontal plane. For example, the horizontal alignment direction of the terminal 100 may be a field of view (field of view, FOV) of the satellite antenna of the terminal 100 on the horizontal plane. A direction of an angle bisector of the field of view of the satellite antenna on the horizontal plane may be the maximum gain direction of the satellite antenna, and an angle value of the field of view of the satellite antenna may be a preset angle (for example, 30°).

Relative locations of the pitch angle alignment area 524C and the location icon 524B indicate a pitch angle between the terminal 100 and the communication satellite 21.

In a possible implementation, the terminal 100 may indicate, on the satellite alignment page 520, the user to adjust both the pitch angle and the horizontal alignment direction of the terminal 100, so that the terminal 100 is aligned with the communication satellite 21 on both the horizontal plane and a pitch angle plane.

For example, as shown in FIG. 5B, the terminal 100 may display an alignment prompt 522 on the satellite alignment page 520. The alignment prompt 522 may be used to prompt the user to adjust the horizontal alignment direction and the pitch angle of the terminal 100 to be aligned with the communication satellite 21 of the network device 200. The alignment prompt 522 may be a text prompt "Turn the mobile phone rightward to move the satellite to the sector area, and tilt the mobile phone upward to move the small ball to the circular area".

In a possible implementation, the terminal 100 may first indicate, on the satellite alignment page 520, the user to adjust the horizontal alignment direction of the terminal 100, so that the terminal 100 is aligned with the communication satellite 21 on the horizontal plane. Then, the terminal 100 may indicate, on the satellite alignment page 520, the user to maintain the horizontal alignment direction and adjust the pitch angle of the terminal 100, so that the terminal 100 is aligned with the communication satellite 21 on the pitch angle plane.

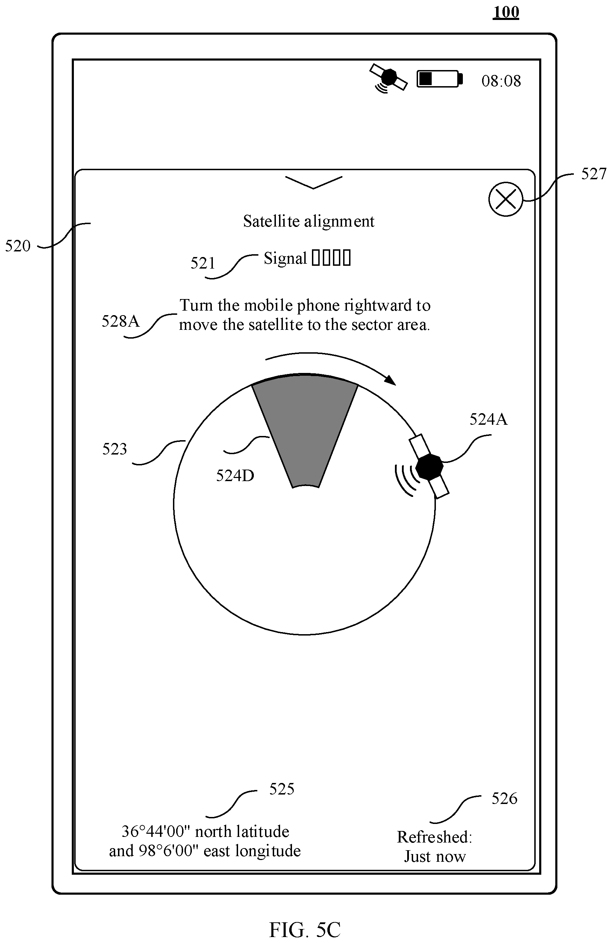

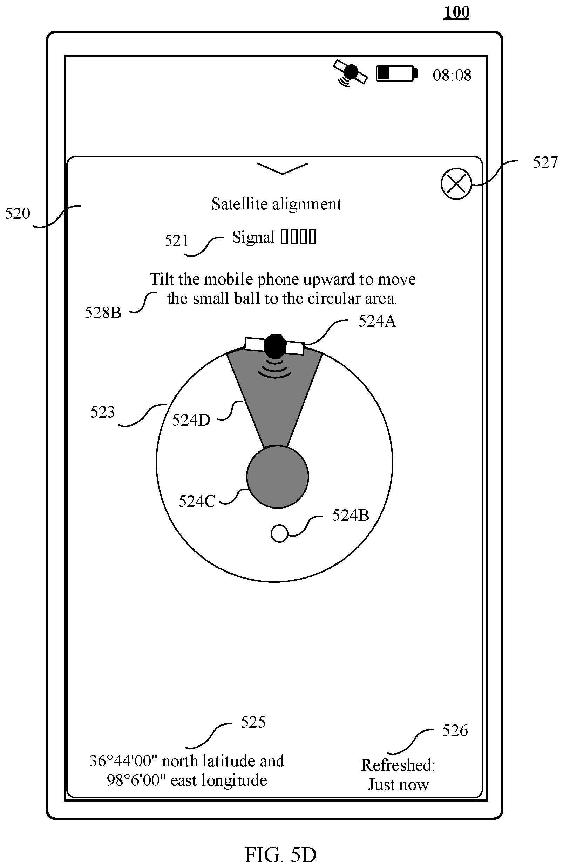

For example, as shown in FIG. 5C, the terminal 100 may first display a horizontal alignment prompt 528A, the horizontal alignment area 524D, and the location icon 524A on the satellite alignment page 520. The horizontal alignment prompt 528A may be used to prompt the user to adjust the horizontal alignment direction of the terminal 100 to be aligned with the communication satellite 21 of the network device 200 in a horizontal direction. For example, the horizontal alignment prompt 528A may be a text prompt "Turn the mobile phone rightward to move the satellite to the sector area". As shown in FIG. 5D, after the user adjusts the horizontal alignment direction of the terminal 100, so that the location icon 524A is located in the horizontal alignment area 524D, the terminal 100 may display, on the satellite alignment page 520, a pitch angle alignment prompt 528B, the location icon 524B corresponding to the terminal 100, and the pitch angle alignment area 524C. The pitch angle alignment prompt 528B may be used to prompt the user to adjust the pitch angle of the terminal 100 to be aligned with the communication satellite 21 of the network device 200 in a pitch angle direction. For example, the pitch angle alignment prompt 528B may be a text prompt "Tilt the mobile phone upward to move the small ball to the circular area".

In a possible implementation, the terminal 100 may first indicate, on the satellite alignment page 520, the user to adjust the pitch angle of the terminal 100, so that the terminal 100 is aligned with the communication satellite 21 on the pitch angle plane. Then, the terminal 100 may indicate, on the satellite alignment page 520, the user to maintain the pitch angle direction and adjust the horizontal alignment direction of the terminal 100, so that the terminal 100 is aligned with the communication satellite 21 on the horizontal plane.

For example, the terminal 100 may first display, on the satellite alignment page 520, the pitch angle alignment prompt 528B, the location icon 524B corresponding to the terminal 100, and the pitch angle alignment area 524C. After the user adjusts the horizontal alignment direction of the terminal 100 to make the location icon 524B be located in the pitch angle alignment area 524C, the terminal 100 may display the horizontal alignment prompt 528A, the horizontal alignment area 524D, and the location icon 524A on the satellite alignment page 520.

If adjustment on the posture of the terminal 100 makes the location icon 524B be located in the pitch angle alignment area 524C and the location icon 524A be located in the horizontal alignment area 524D, the terminal 100 is aligned with the communication satellite 21. In this way, when the terminal 100 is aligned with the communication satellite 21, signal quality of a signal that is sent by the network device 200 on the satellite link and that has been received by the terminal 100 can be improved. Optionally, the satellite alignment page 520 may further include longitude and latitude of a location of the terminal 100 and positioning refresh time 526 of the terminal 100.

Optionally, the terminal 100 may successfully receive, in a screen-on locked state, a screen-on unlocked state, a screen-off state, an always-on-display state, or the like, the enhanced paging request (Alert Request) sent by the network device 200 through the satellite link. If the terminal 100 has received, in the screen-off state or the always-on-display state, the enhanced paging request (Alert Request) sent by the network device 200 through the satellite link, the terminal 100 may first switch to the screen-on locked state and display the paging prompt on a lock screen. If the terminal 100 has received, in the screen-on locked state or the screen-on unlocked state, the enhanced paging request (Alert Request) sent by the network device 200 through the satellite link, the terminal 100 may directly display the paging prompt.

In a possible implementation, the terminal 100 may store ephemeris information of the communication satellite 21 of the network device 200, and the terminal 100 may determine a location of the communication satellite 21 based on the ephemeris information of the communication satellite 21 and system time.

S405: The terminal 100 receives the downlink broadcast signal sent by the network device 200.

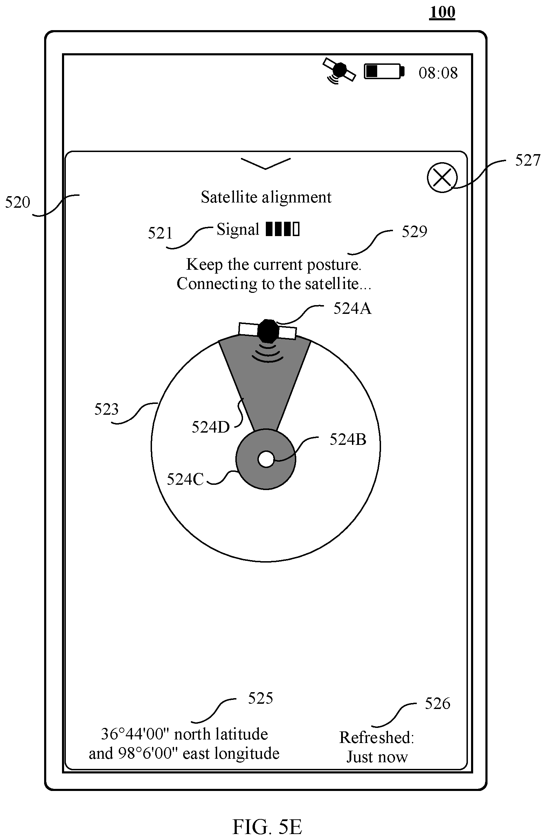

For example, as shown in FIG. 5E, after the terminal 100 is aligned with the communication satellite 21, the terminal 100 may successfully receive the downlink broadcast signal sent by the network device 200 on the broadcast control channel (broadcast control channel, BCCH) of the satellite link. In this case, the signal strength of the downlink broadcast signal indicated by the satellite signal strength indicator 521 may be specific signal strength. For example, the satellite signal strength indicator 521 may display three solid signal bars and one hollow signal bar. A larger quantity of solid signal bars indicates higher signal strength. After having received the downlink broadcast signal sent by the network device 200, the terminal 100 may further display a connection prompt 529. The connection prompt 529 may indicate that the network device 200 is being connected. For example, the connection prompt 529 may be "Keep the current posture. Connecting to the satellite...".

S406: After detecting the downlink broadcast signal sent by the network device 200, the terminal 100 initiates a random access process to the network device 200.

After detecting the downlink broadcast signal sent by the network device 200, the terminal 100 may first send a channel request (Channel Request) on a random access channel (random access channel, RACH).

After having received the channel request (Channel Request), the network device 200 may configure SDCCH resources for the terminal 100. An SDCCH is used to transmit system signaling in processes such as call setup, authentication, location update, allocation of a service channel (for example, a traffic channel (TCH) or a packet data channel (PDCH)), and SMS message transmission between the terminal 100 and the network device 200. The service channel may be used to transmit a voice service and a data service of the user.

S407: The network device 200 sends an immediate assignment (IMM Assign) message to the terminal 100.

After configuring the SDCCH resources for the terminal 100, the network device 200 may send the IMM Assign message to the terminal 100 on an access grant channel (AGCH). The IMM Assign message is used to indicate the terminal 100 to switch from the AGCH to the SDCCH. The IMM Assign message may carry one or more of a paging mode, description information of the SDCCH, description information of a slow association control channel (slow association control channel, SACCH), frequency hopping information (including a parameter request reference, an initial timing advance, and frequency allocation), or the like. The SACCH is used to transmit scheduling and management information. For example, the SACCH may be used to send a measurement report, perform power control, perform time calibration, send an SMS message, or the like.

After the network device 200 sends the IMM Assign message to the terminal 100, the terminal 100 may set up an RRC connection to the network device 200.

S408: The terminal 100 sends a paging response (Paging Response) to the network device 200.

The terminal 100 may send a set asynchronous balanced mode (SABM) frame to the network device 200, where the SABM frame includes the paging response.

S409: If the network device 200 has received, within second preset duration after sending the enhanced paging request to the terminal 100, the paging response sent by the terminal 100, the network device 200 performs a communication service with the terminal 100.

The communication service may include a call service and an SMS message service.

If the network device 200 has received, within the second preset duration after sending the enhanced paging request (Alerting Request) to the terminal 100, the paging response sent by the terminal 100, the network device 200 may first perform an authentication and identity verification process on the terminal 100. After completing the authentication and identity verification process, the network device 200 may perform the communication service with the terminal 100.

If the network device 200 has not received, within the second preset duration after sending the enhanced paging request (Alerting Request) to the terminal 100, the paging response sent by the terminal 100, the network device 200 ends a paging procedure with the terminal 100.

The network device 200 may start a THPA timer after sending the enhanced paging request (Alert Request) to the terminal 100. Timeout duration of the THPA timer is the second preset duration. If the network device 200 has received, before the THPA timer expires, the paging response sent by the terminal 100, the network device 200 may notify the THPA timer.

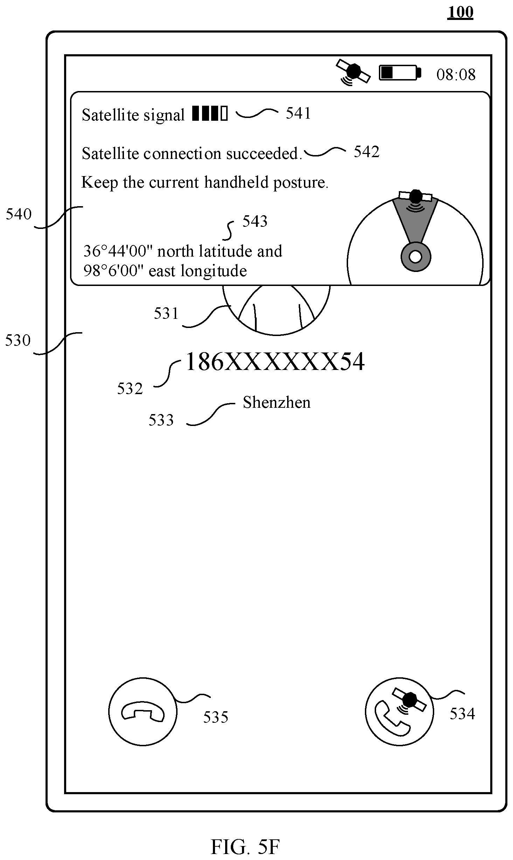

For example, as shown in FIG. 5F, after the network device 200 completes the authentication and identity verification process on the terminal 100, a connection prompt window 540 may be displayed. The connection prompt window 540 may include a satellite signal indicator 541 and connection success prompt information 542. Optionally, the connection prompt window 540 may further include longitude and latitude 543 of the location of the terminal 100. The satellite signal indicator 541 may indicate the signal strength of the downlink broadcast signal that is sent by the network device 200 on the broadcast control channel (BCCH) of the satellite link and that has been received by the terminal 100. The connection success prompt information 542 may be used to prompt the user that the terminal 100 has successfully connected to a satellite network.

After the network device 200 completes the authentication and identity verification process on the terminal 100, if the communication service is a call service, the network device 200 may send call information to the terminal 100. The call information may include a number of a call initiator (namely, a number of the terminal 300). Optionally, the call information may further include directory information, operator information, and/or the like of the number of the call initiator. After having received the call information, the terminal 100 may display an incoming call interface 530 shown in FIG. 5F. The incoming call interface 530 may include an avatar 531 of the call initiator, a number 532 (for example, "186XXXXXX54") of the call initiator, directory information 533 (for example, "Shenzhen") of the call initiator, a decline control 535, an answer control 534, and the like. The avatar 531 of the call initiator may be an avatar that corresponds to the number 532 of the call initiator and that is stored on the terminal 100. If the terminal 100 does not store the avatar corresponding to the number 532 of the call initiator, the terminal 100 may use a default avatar as the avatar corresponding to the number 532 of the call initiator. The decline control 535 may be used to decline the current call. The answer control 534 may be used to answer the current call. If the terminal 100 has received an input of the user on the answer control 534, the terminal 100 may send an answer instruction to the network device 200, and the network device 200 may answer the call between the terminal 100 and the terminal 300 in response to the answer instruction. If the terminal 100 has received an input of the user on the decline control 535, the terminal 100 may send a decline instruction to the network device 200, and the network device 200 may end the call from the terminal 300 to the terminal 100 in response to the decline instruction.

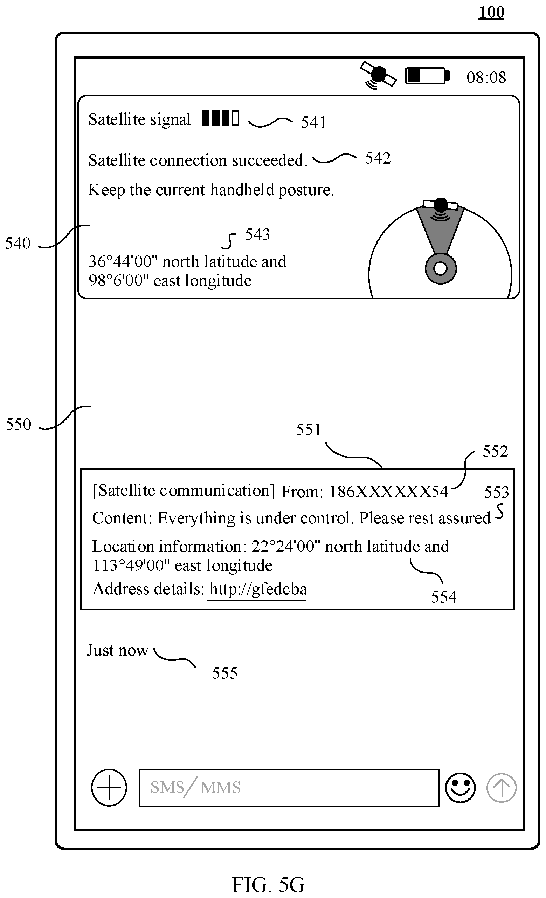

In a possible implementation, as shown in FIG. 5G, after the network device 200 completes the authentication and identity verification process on the terminal 100, if the communication service is an SMS message service, the network device 200 may send an SMS message to the terminal 100. The SMS message may include a sender number and content. Optionally, the SMS message may further include location information of a sender of the SMS message, or the like. After having received the SMS message, the terminal 100 may display an SMS message prompt box 551 in an interface 550 of a Messages application. The SMS message prompt box 551 includes a sender number 552 (for example, "186XXXXXX54") and content 553 (for example, "Everything is under control. Please rest assured") of the SMS message. Optionally, the SMS message prompt box 551 may further include location information 554 (for example, "22°24'00" north latitude and 113°49'00" east longitude") of the sender of the SMS message and time 555 (for example, "Just now") at which the terminal 100 successfully receives the SMS message.

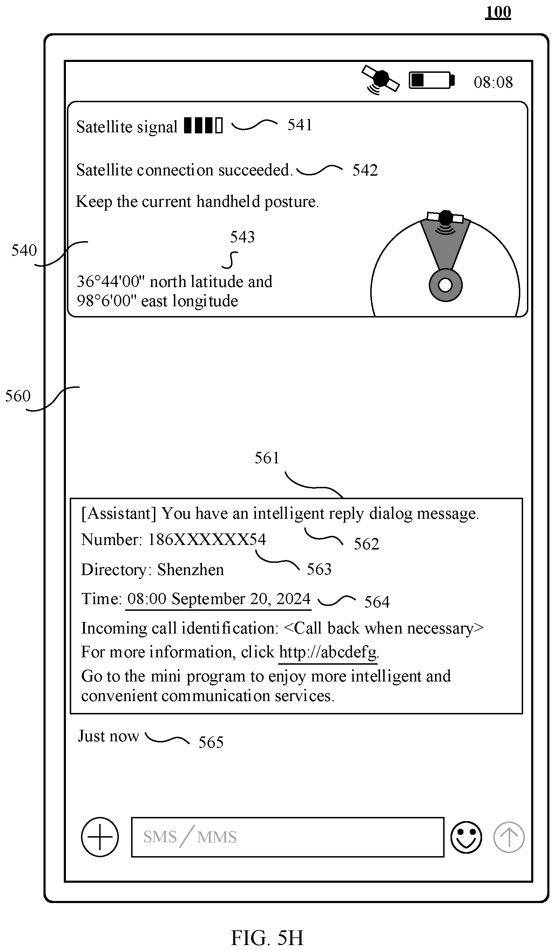

In a possible implementation, as shown in FIG. 5H, an incoming call SMS message notification service may be activated for a number of the terminal 100. If the communication service is a call service, and the network device 200 has not received, within the second preset duration after sending the enhanced paging request (Alerting Request) to the terminal 100, the paging response sent by the terminal 100, the network device 200 ends the paging procedure with the terminal 100. In this case, the call service is not answered. Therefore, the network device 200 may generate missed call information of the call service. After the terminal 100 is connected to the network device next time, the network device 200 may send the missed call information to the terminal 100. After having received the missed call information, the terminal 100 may display a missed call prompt message 561 in an interface 560 of the Messages application. The missed call prompt message 561 may include a caller number 562 (for example, "186XXXXXX54") of the missed call service, directory information 563 (for example, "Shenzhen") of the caller number 562, call time information 564 (for example, "08:00 September 20, 2024") of the missed call service, time 565 (for example, "Just now") at which the terminal 100 successfully receives the missed call information, and the like.

In a possible implementation, the terminal 100 may successfully receive, through the satellite link, the enhanced paging request sent by the network device 200. The terminal 100 may display the paging prompt after having received the enhanced paging request sent by the network device 200 through the satellite link, where the paging prompt is used to inform the user of arrival of paging for the terminal 100 and to adjust the posture and a use place of the terminal 100 to connect to the network device 200. The terminal 100 may display a navigation page after displaying the paging prompt, where the navigation page may include a map and a navigation guidance prompt, and the navigation guidance prompt may be used to guide the user to carry the terminal 100 to an open area. The map may be any one or more of a planar map, a three-dimensional terrain map, a three-dimensional real-scene map, or the like. A resource package of the map may be preset in the terminal 100, or may be cached and downloaded from a map server to the terminal 100 before the terminal 100 is disconnected from the network device 200. The terminal 100 may display the satellite alignment page 520 after detecting that the terminal 100 is in the open area.

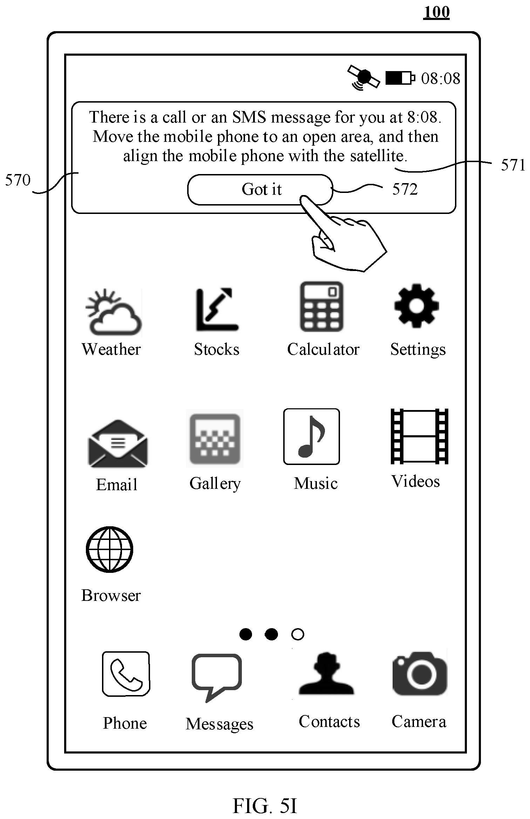

For example, as shown in FIG. 5I, after having received, through the satellite link, the enhanced paging request sent by the network device 200, the terminal 100 may display a prompt box 570. The prompt box 570 may include a paging prompt 571 and a control 572. The paging prompt 571 may be used to inform the user of arrival of paging for the terminal 100 and to adjust the posture and the use place of the terminal 100 to connect to the network device 200. The paging prompt 571 may be "There is a call or an SMS message for you at 8:08. Move the mobile phone to an open area, and then align the mobile phone with the satellite". Optionally, after having received the enhanced paging request (Alert Request) sent by the network device 200 through the satellite link, the terminal 100 may further output a specified vibration prompt and a specified sound prompt.

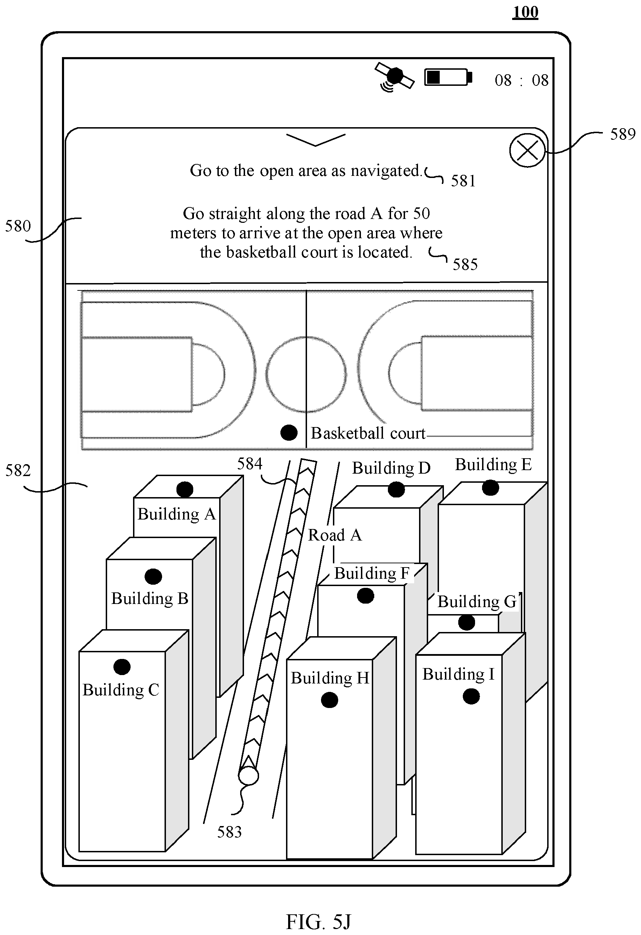

The terminal 100 may successfully receive an input of the user on the control 572. In response to the input of the user on the control 572, the terminal 100 may display a navigation page 580 shown in FIG. 5J.

As shown in FIG. 5J, the navigation page 580 may include prompt information 581, a map 582, and a navigation guidance prompt 585. The prompt information 581 may be used to prompt the user to go to the open area as navigated. For example, the prompt information 581 may be a text prompt "Go to the open area as navigated". A location icon 583 corresponding to the location of the terminal 100, geographical information of the location of the terminal 100, and a navigation guidance path 584 may be displayed on the map 582. The geographical information of the location of the terminal 100 may include road information, building information (for example, a building A, a building B, a building C, a building D, a building E, a building F, a building G, a building H, a building I, and a basketball court), or the like around the location of the terminal 100. The navigation guidance path 584 may be used to prompt the user for a route to the open area (for example, the basketball court). The navigation guidance prompt 585 may be used to guide the user to go to the open area (for example, the basketball court). For example, the navigation guidance prompt 585 may be a text prompt and/or a voice prompt, and content of the navigation guidance prompt 585 may be "Go straight along the road A for 50 meters to arrive at the open area where the basketball court is located". Optionally, the navigation page 580 may further include a close control 589. The close control 589 may be used to close the navigation page 580.

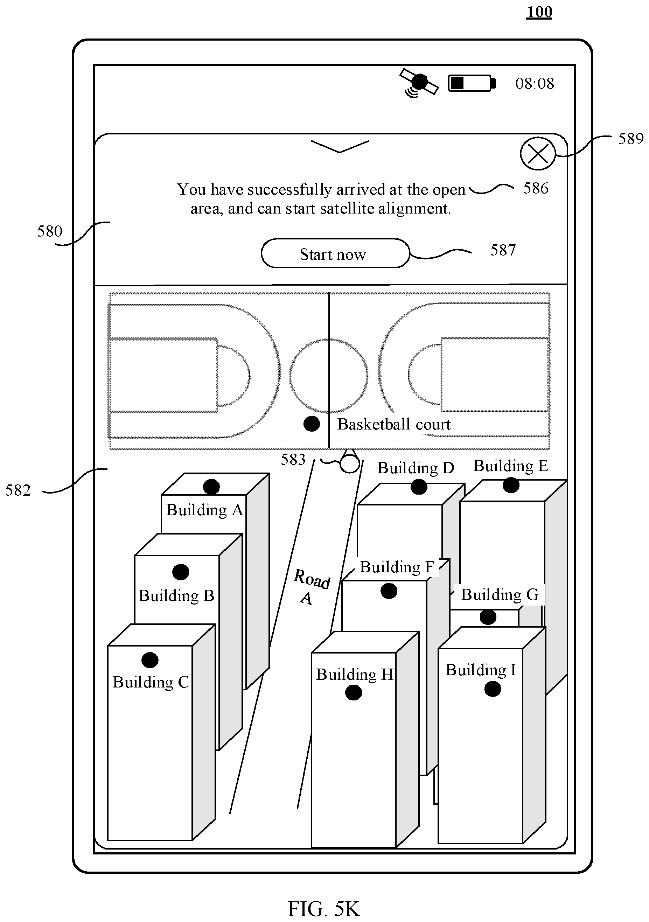

As shown in FIG. 5K, when the terminal 100 detects that the terminal 100 arrives at the open area, the terminal 100 may display a satellite alignment start prompt 586 and a start control 587. The satellite alignment start prompt 586 may be used to notify the user that the user has arrived at the open area and starts to be aligned with the communication satellite. For example, content of the satellite alignment start prompt 586 may be "You have successfully arrived at the open area, and can start satellite alignment". After having received an input of the user on the start control 587, the terminal 100 may display the satellite alignment page 520 shown in FIG. 5B to FIG. 5E.

Optionally, after the terminal 100 detects that the terminal 100 arrives at the open area, the terminal 100 may directly display the satellite alignment page 520 shown in FIG. 5B to FIG. 5E.

In some embodiments, if the network device 200 has not received, within the first preset duration after sending the paging request to the terminal 100, the paging response sent by the terminal 100, the network device 200 may resend the paging request to the terminal 100. If the network device 200 has not yet received the paging response from the terminal 100 within the first preset duration after sending the paging request x (where x is a positive integer, for example, x may be 2) times, the network device 200 may send the enhanced paging request (Alert Request) to the terminal 100.

In a possible implementation, if the network device 200 has not yet received, within the second preset duration after sending the enhanced paging request (Alert Request) to the terminal 100, the paging response sent by the terminal 100, the network device 200 may resend the enhanced paging request (Alert Request) to the terminal 100. If the network device 200 has not yet received the paging response from the terminal 100 within the second preset duration after sending the enhanced paging request (Alert Request) y (where y is a positive integer, for example, y may be 2) times, the network device 200 ends the paging procedure with the terminal 100.

According to the communication method provided in this embodiment of this application, if the network device 200 has not received, within specified time after sending the paging request to the terminal 100, the paging response sent by the terminal 100, the network device 200 may trigger, by using the enhanced paging request, the terminal 100 to display the paging prompt, to prompt the user to adjust the posture and/or the use place of the terminal 100, so as to improve quality of a link between the terminal 100 and the network device 200, so that the terminal 100 can return the paging response to the network device 200 in time, to perform the communication service with the network device 200. In this way, a success rate of paging the terminal 100 by the network device 200 can be increased, and when link quality is poor, the user using the terminal 100 can be informed in time of arrival of the communication service.

The following describes a condition required for the network device 200 to initiate paging to the terminal 100 in this embodiment of this application.

When the network device 200 detects that there is a communication service for paging the terminal 100, the network device 200 first determines whether the terminal 100 is in an attached state. If the terminal 100 is in the attached state, the network device 200 may send the paging request or the enhanced paging request to the terminal 100. If the terminal 100 is in an unattached state, the terminal 100 needs to re-initiate an attach procedure to the network device 200, so that the network device 200 can send paging signaling (for example, the paging request or the enhanced paging request) to the terminal 100.

However, when the quality of the air interface link between the terminal 100 and the network device 200 is poor, and consequently the terminal 100 fails to perform signaling interaction with the network device 200 within a specific period of time, if the quality of the air interface link between the terminal 100 and the network device 200 becomes better, the terminal 100 cannot successfully receive the paging request or the enhanced paging request of the network device 200.

If the terminal 100 is to be attached to the network device 200 for a long time, at least the following two conditions need to be satisfied.

Condition 1: After being successfully attached to a network, the terminal 100 does not actively initiate a detach (detach) action.

Condition 2: An implicit detach timer (implicit detach timer) on the network device 200 does not expire. The implicit detach timer is used to record duration in which signaling interaction fails to be performed between the terminal 100 and the network device 200.

When the terminal 100 is powered on, after being attached to the network device 200, the terminal 100 usually does not actively initiate the detach action to the network device 200. However, the network device 200 keeps collecting statistics, by using the implicit detach timer (implicit detach timer), on the duration in which signaling interaction fails to be performed between the terminal 100 and the network device 200. If the implicit detach timer expires, it indicates that the duration in which signaling interaction fails to be performed between the terminal 100 and the network device 200 exceeds timeout duration of the implicit detach timer. In this case, the network device 200 changes a status of the terminal 100 from the attached state to the unattached state.

Therefore, according to the communication method provided in this embodiment of this application, the terminal 100 may output an adjustment prompt when detecting that the terminal 100 does not perform signaling interaction with the network device 200 within third preset duration. The adjustment prompt is used to prompt the user to adjust the posture and/or the use place of the terminal 100 to connect to the network device 200. The third preset duration is less than the timeout duration of the implicit detach timer. After the user adjusts the posture and/or the use place of the terminal 100 to improve the quality of the air interface link between the terminal 100 and the network device 200, the terminal 100 may successfully receive the downlink broadcast signal sent by the network device 200. After having received the downlink broadcast signal sent by the network device 200, the terminal 100 may initiate the attach procedure to the network device 200, so that the network device 200 resets the implicit detach timer. In this way, the terminal 100 can remain in the attached state. Therefore, the network device 200 can send paging signaling (for example, the paging request or the enhanced paging request) to the terminal 100 in time.

A type of the adjustment prompt may include any one or more of a text prompt, an image prompt, a video prompt, a vibration prompt, a sound prompt, or the like.

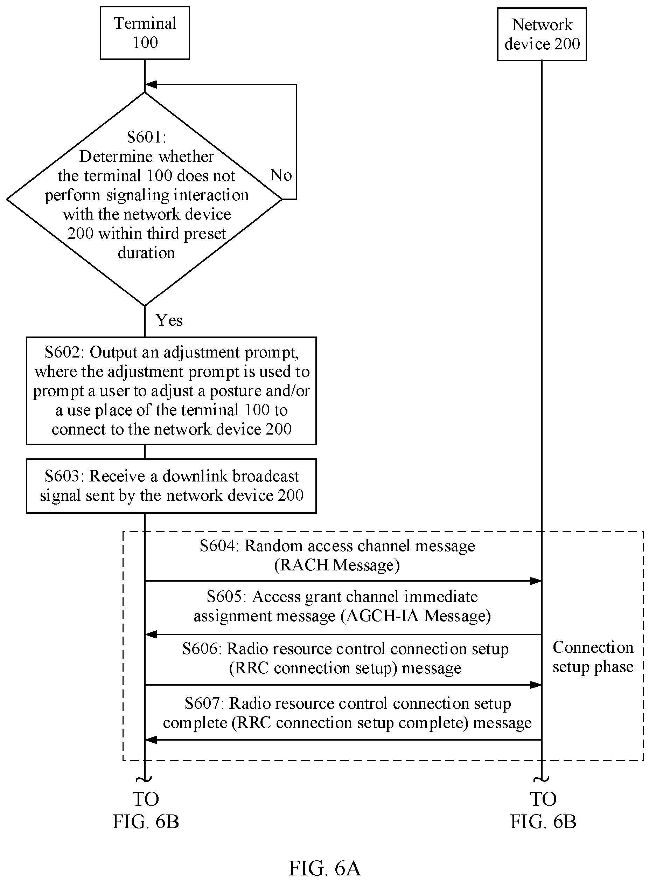

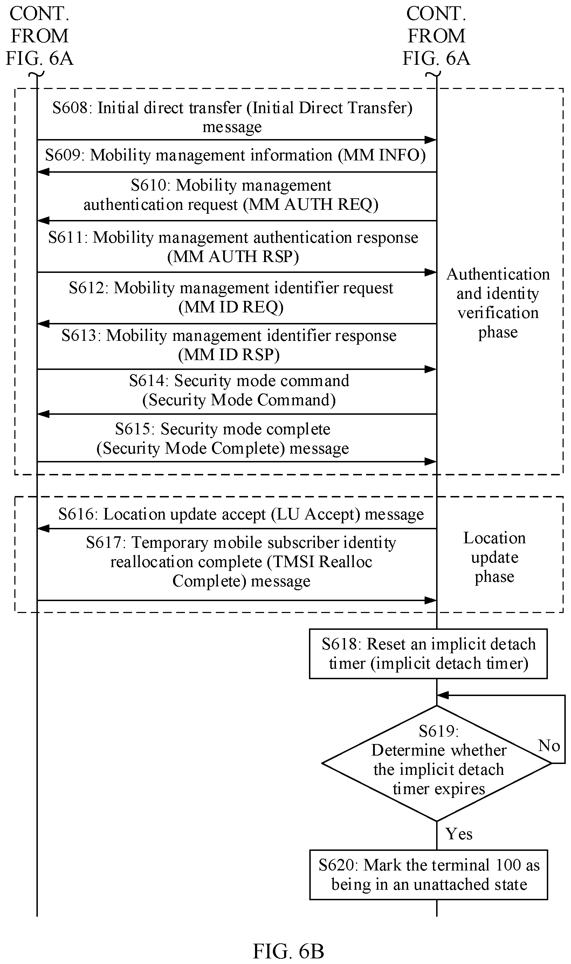

FIG. 6A and FIG. 6B are a schematic flowchart of a communication method according to another embodiment of this application.

As shown in FIG. 6A and FIG. 6B, the communication method according to the another embodiment of this application may include the following steps.

S601: A terminal 100 determines whether the terminal 100 does not perform signaling interaction with a network device 200 within third preset duration.

In an example, the terminal 100 may determine, by detecting duration in which the terminal 100 has not received a downlink broadcast signal sent by the network device 200, whether the terminal 100 does not perform signaling interaction with the network device 200 within the third preset duration. If the duration in which the terminal 100 has not received the downlink broadcast signal sent by the network device 200 exceeds the third preset duration, the terminal 100 may determine that the terminal 100 does not perform signaling interaction with the network device 200 within the third preset duration.

In another example, when a communication link between the terminal 100 and the network device 200 is a satellite communication link, a satellite alignment page needs to be displayed each time the terminal 100 communicates with the network device 200. The satellite alignment page is used to guide a user to be aligned with a communication satellite 21 of the network device 200. Therefore, the terminal 100 may determine, by detecting whether the satellite alignment page is not displayed within the third preset duration, whether the terminal 100 does not perform signaling interaction with the network device 200 within the third preset duration. If the terminal 100 detects that the satellite alignment page is not displayed within the third preset duration, the terminal 100 may determine that the terminal 100 does not perform signaling interaction with the network device 200 within the third preset duration.

The third preset duration is less than timeout duration of an implicit detach timer. The third preset duration may be preset on the terminal 100.

In a possible implementation, the terminal 100 may receive the third preset duration delivered by a server.

In another possible implementation, the terminal 100 may receive the timeout duration of the implicit detach timer delivered by the server, and the terminal 100 may determine the third preset duration based on the timeout duration of the implicit detach timer.

S602: If the terminal 100 does not perform signaling interaction with the network device 200 within the third preset duration, the terminal 100 may output an adjustment prompt, where the adjustment prompt is used to prompt the user to adjust a posture and/or a use place of the terminal 100 to connect to the network device 200.

A type of the adjustment prompt may include any one or more of a text prompt, an image prompt, a video prompt, a vibration prompt, a sound prompt, or the like.

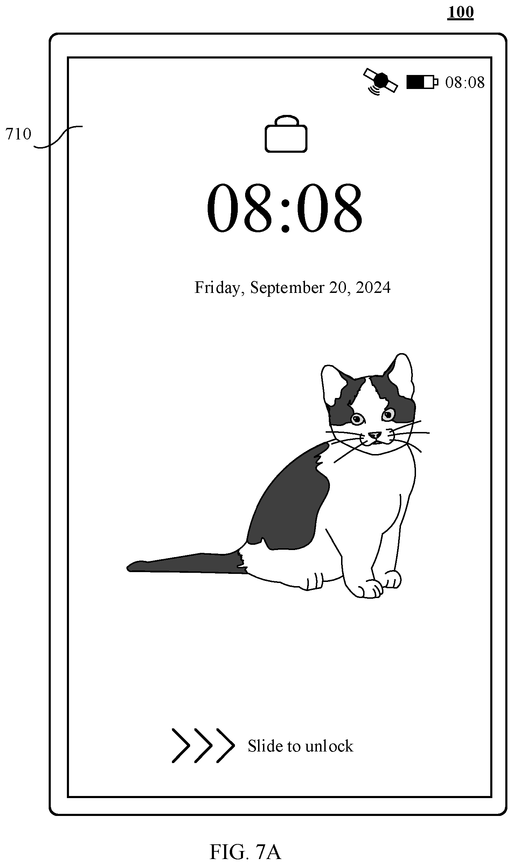

For example, as shown in FIG. 7A, the terminal 100 may be in a locked state and display a lock screen 710.

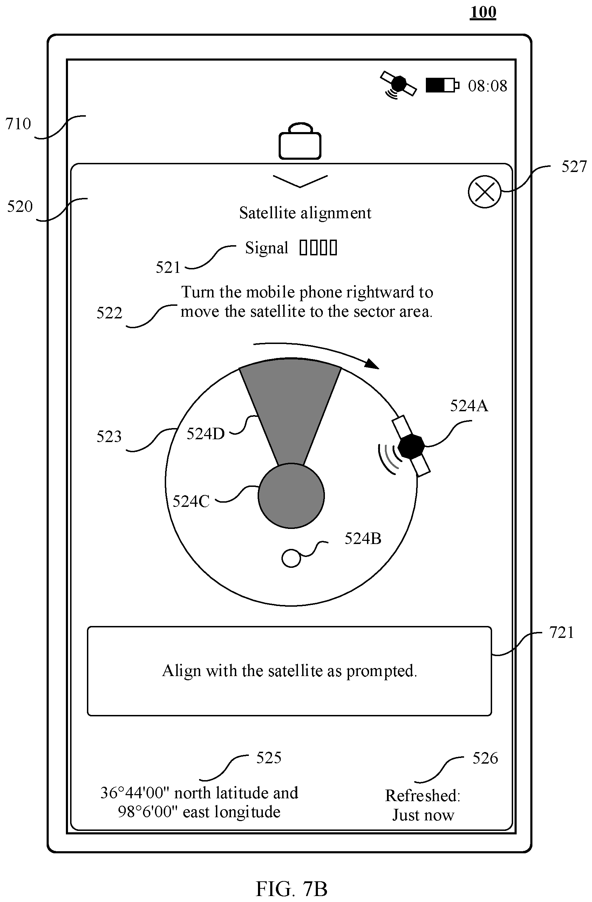

As shown in FIG. 7B, when the terminal 100 detects that the terminal 100 does not perform signaling interaction with the network device 200 within the third preset duration, the terminal 100 may display an adjustment prompt 721 and a satellite alignment page 520 on the lock screen 710. The adjustment prompt 721 may be a text prompt "Align with the satellite as prompted". For descriptions of the satellite alignment page 520, refer to the text descriptions in the embodiment shown in FIG. 5B to FIG. 5E. Details are not described herein again.

Optionally, the terminal 100 may display the adjustment prompt 721 in a screen-on locked state, a screen-on unlocked state, a screen-off state, an always-on-display state, or the like. If the terminal 100 can detect, in the screen-off state or the always-on-display state, that the terminal 100 does not perform signaling interaction with the network device 200 within the third preset duration, the terminal 100 may first switch to the screen-on locked state and display the adjustment prompt on the lock screen. If the terminal 100 detects, in the screen-on locked state or the screen-on unlocked state, that the terminal 100 does not perform signaling interaction with the network device 200 within the third preset duration, the terminal 100 may directly display the adjustment prompt.

S603: The terminal 100 receives the downlink broadcast signal sent by the network device 200.

The terminal 100 may initiate an attach (attach) procedure to the network device 200 after having received the downlink broadcast signal sent by the network device 200. The attach procedure may include a connection setup phase, an authentication and identity verification phase, a location update phase, or the like. The connection setup phase includes the following step S604 to step S608, the authentication and identity verification phase includes the following step S609 to step S615, and the location update phase includes the following step S616 and step S617.

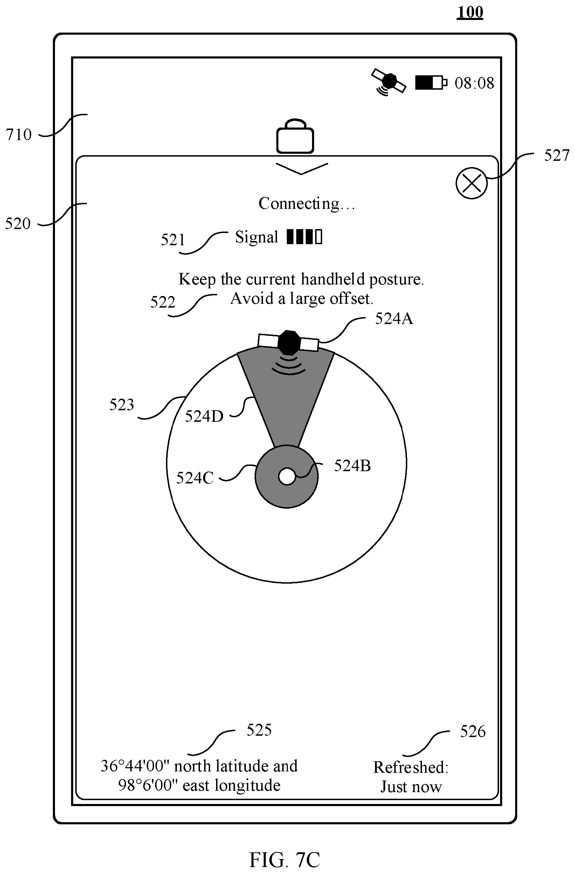

For example, as shown in FIG. 7C, after the terminal 100 is aligned with the communication satellite 21, the terminal 100 may successfully receive the downlink broadcast signal sent by the network device 200 on a broadcast control channel (broadcast control channel, BCCH) of a satellite link. In this case, signal strength of the downlink broadcast signal indicated by a satellite signal strength indicator 521 may be specific signal strength. For example, the satellite signal strength indicator 521 may display three solid signal bars and one hollow signal bar. A larger quantity of solid signal bars indicates higher signal strength.

S604: The terminal 100 sends a random access channel message (RACH Message) to the network device 200.

S605: The network device 200 sends an access grant channel immediate assignment message (AGCH-IA Message) to the terminal 100.

S606: The terminal 100 sends a radio resource control connection setup (RRC connection setup) message to the network device 200.

S607: The network device 200 sends a radio resource control connection setup complete (RRC connection setup complete) message to the terminal 100.

S608: The terminal 100 sends an initial direct transfer (Initial Direct Transfer) message to the network device 200.

The initial direct transfer (Initial Direct Transfer) message may be used to set up a signaling connection between the terminal 100 and a core network (core network, CN) of the network device 200.

S609: The network device 200 sends mobility management information (MM INFO) to the terminal 100.

The mobility management information may include information such as a time zone, time, and daylight saving time.

S610: The network device 200 sends a mobility management authentication request (MM AUTH REQ) to the terminal 100.

The mobility management authentication request carries an authentication parameter. The authentication parameter may include but is not limited to a random (random, RAND) number, an authentication token (authentication token, AUTN), or the like generated by the network device 200 by using a random number generator.

S611: The terminal 100 sends a mobility management authentication response (MM AUTH RSP) to the network device 200.

After having received the authentication request sent by the network device 200, the terminal 100 may obtain a response result of the terminal 100 through calculation based on the RAND and the AUTN in the authentication parameter. The terminal 100 may send the mobility management authentication response to the network device 200. The authentication response may carry the response result.

S612: The network device 200 sends a mobility management identifier request (MM ID REQ) to the terminal 100.

S613: The terminal 100 sends a mobility management identifier response (MM ID RSP) to the network device 200.

S614: The network device 200 sends a security mode command (Security Mode Command) message to the terminal 100.

After receiving the response result of the terminal 100, the network device 200 performs authentication on the terminal 100 based on the response result. After the authentication succeeds, the network device 200 may send the security mode command message to the terminal 100. The security mode command message may include information such as an encryption algorithm and an integrity protection algorithm. The security mode command message may be used to indicate the terminal 100 to start integrity protection and data encryption.

S615: The terminal 100 sends a security mode complete (Security Mode Complete) message to the network device 200.

The terminal 100 may determine the integrity protection algorithm and the encryption algorithm based on the security mode command message. The terminal 100 may encrypt a non-access stratum (non-access stratum, NAS) message based on the integrity protection algorithm and the encryption algorithm. The terminal 100 may further send the security mode complete message to the network device 200, to indicate that the terminal 100 completes security mode configuration, and that an encryption mode and an integrity protection mode have been set.

Optionally, the network device 200 may send an identity request to the terminal 100. The identity request is used to obtain an identity of the terminal 100, and the identity may be used by the network device 200 to confirm validity of the terminal 100. For example, the identity of the terminal 100 may be an international mobile equipment identity software version (international mobile equipment identity software version, IMEISV). After having received the identity request, the terminal 100 may send, to the network device 200, an identity response that carries the identity of the terminal 100. In this way, the network device 200 may re-confirm the identity of the terminal 100 based on the identity of the terminal 100.

S616: The network device 200 sends a location update accept (LU Accept) message to the terminal 100.

After having received the security mode complete message, the network device 200 may allocate a TMSI and a location area code to the terminal 100. The network device 200 may send a location area update accept message to the terminal 100, to notify the terminal 100 that IMSI attach succeeds.

S617: The terminal 100 sends a temporary mobile subscriber identity reallocation complete (TMSI Realloc Complete) message to the network device 200.

The temporary mobile subscriber identity reallocation complete message may indicate that the terminal 100 has obtained a temporary mobile subscriber identity (TMSI).

After the terminal 100 sends the temporary mobile subscriber identity reallocation complete message to the network device 200, it indicates that the attach procedure initiated by the terminal 100 to the network device 200 is completed.

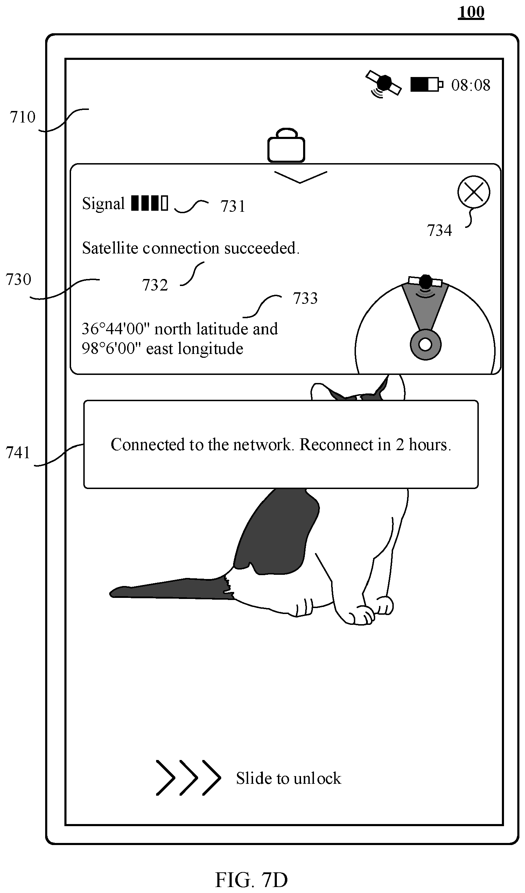

For example, as shown in FIG. 7D, after the terminal 100 completes the attach procedure to the network device 200, the terminal 100 may display a connection prompt window 730. The connection prompt window 730 may include a satellite signal indicator 731 and connection success prompt information 732. Optionally, the connection prompt window 730 may further include longitude and latitude 733 of a location of the terminal 100 and a close control 734. The satellite signal indicator 731 may indicate the signal strength of the downlink broadcast signal that is sent by the network device 200 on the broadcast control channel (BCCH) of the satellite link and that has been received by the terminal 100. The connection success prompt information 732 may be used to prompt the user that the terminal 100 has successfully connected to a satellite network. The close control 734 may be used to close the connection prompt window 730. Optionally, the terminal 100 may further display a reconnection prompt 741 after completing the attach procedure. The reconnection prompt 741 may be used to prompt the user to reconnect to the network device 200 after the third preset duration. For example, the reconnection prompt 741 may be a text prompt "Connected to the network. Reconnect in 2 hours".

S618: The network device 200 resets the implicit detach timer (Implicit Detach Timer).

After having received the temporary mobile subscriber identity reallocation complete message, the network device 200 may reset the implicit detach timer, so that the implicit detach timer re-performs timing.

S619: The network device 200 determines whether the implicit detach timer expires.

S620: If the implicit detach timer expires, the network device 200 marks the terminal 100 as being in an unattached state.

According to the communication method provided in this embodiment of this application, the terminal 100 may output the adjustment prompt when detecting that the terminal 100 does not perform signaling interaction with the network device 200 within the third preset duration. The adjustment prompt is used to prompt the user to adjust the posture and/or the use place of the terminal 100 to connect to the network device 200. The third preset duration is less than the timeout duration of the implicit detach timer. After the user adjusts the posture and/or the use place of the terminal 100 to improve the quality of the air interface link between the terminal 100 and the network device 200, the terminal 100 may successfully receive the downlink broadcast signal sent by the network device 200. After having received the downlink broadcast signal sent by the network device 200, the terminal 100 may initiate the attach procedure to the network device 200, so that the network device 200 resets the implicit detach timer. In this way, the terminal 100 can remain in an attached state. Therefore, the network device 200 can send paging signaling (for example, a paging request and/or an enhanced paging request) to the terminal 100 in time.

In some embodiments, the terminal 100 may output the adjustment prompt when the terminal 100 detects that a distance by which the terminal 100 moves exceeds a preset distance threshold in a time period in which the terminal 100 does not perform signaling interaction with the network device 200. The adjustment prompt is used to prompt the user to adjust the posture and/or the use place of the terminal 100 to connect to the network device 200. After the quality of the air interface link between the terminal 100 and the network device 200 is improved by adjusting the posture and/or the use place of the terminal 100, the terminal 100 may successfully receive the downlink broadcast signal sent by the network device 200. After having received the downlink broadcast signal sent by the network device 200, the terminal 100 may initiate the attach procedure to the network device 200, so that the network device 200 updates and records the location of the terminal 100. In this way, when the location of the terminal 100 changes greatly, the network device 200 can update and record the location of the terminal 100 in time, so that when detecting a communication service for paging the terminal 100, the network device 200 can send the paging signaling (for example, the paging request and/or the enhanced paging request) to the terminal 100 in a satellite beam or cell in which the terminal 100 is actually located, to increase a success rate of successfully receiving the paging signaling by the terminal 100.

In an example, the preset distance threshold may be a maximum straight-line distance within coverage of one satellite beam of the network device 200. In another example, the preset distance threshold may be a maximum straight-line distance within coverage of one cell of the network device 200.

The following describes a condition required by the terminal 100 to successfully receive the paging signaling sent by the network device 200 in this embodiment of this application.

The condition required by the terminal 100 to successfully receive the paging signaling (for example, the paging request or the enhanced paging request) sent by the network device 200 is that the terminal 100 is time-synchronized and frequency-synchronized with the network device 200.

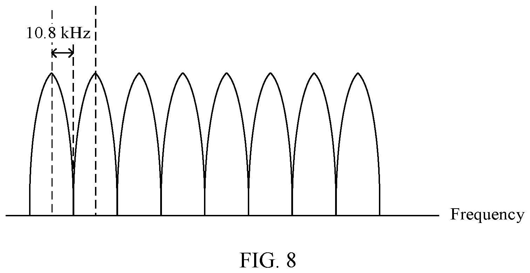

For example, as shown in FIG. 8, the geosynchronous orbit (geosynchronous orbit, GEO) mobile radio interface specifications (mobile radio interface specifications, GMR) protocol is used as an example. A frequency spacing between subcarriers on a BACH channel is 10.8 kilohertz (kHz). If the terminal 100 needs to successfully parse out the enhanced paging request from the BACH channel, a frequency difference between the terminal 100 and the network device 200 needs to be less than or equal to the frequency spacing (namely, 10.8 kHz) between the subcarriers on the BACH channel.

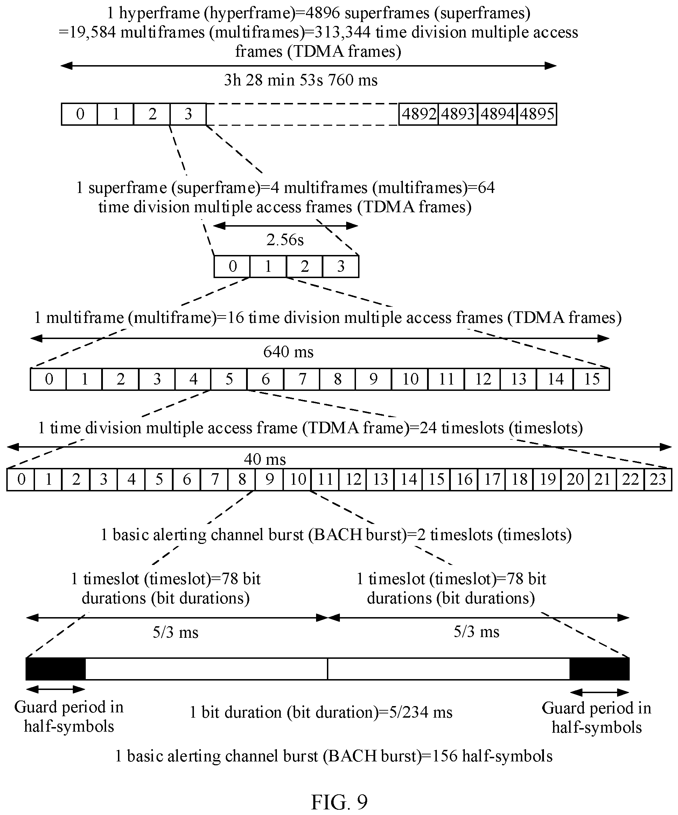

As shown in FIG. 9, the GMR protocol is used as an example. A signal on the BACH channel may be transmitted by using a hyperframe (hyperframe). Duration of one hyperframe may be 3 hours, 28 minutes, 53 seconds, and 760 milliseconds (namely, 3h 28 min 53s 760 ms). One hyperframe may include 4896 superframes (superframes). One superframe may include 4 multiframes (multiframes). One multiframe may include 16 time division multiple access frames (TDMA frames). In other words, one hyperframe includes 19,584 multiframes, or one hyperframe includes 313,344 time division multiple access frames. Therefore, duration of one superframe is 2.56 seconds (s), duration of one multiframe is 640 milliseconds (ms), and duration of one time division multiple access frame is 40 milliseconds (ms). One time division multiple access frame includes 24 timeslots (timeslots), and therefore, duration of one timeslot (timeslot) is 5/3 milliseconds (ms). One timeslot includes 78 bit durations (bit durations), in other words, one bit duration is 5/234 ms. The enhanced paging request (Alert request) sent on the BACH channel is 15 basic alerting channel bursts (BACH bursts). One BACH burst occupies two timeslots. In other words, duration of one BACH burst is 10/3 ms.

One BACH burst includes 156 half-symbols (half-symbols). Half-symbol 0 to half-symbol 4 of the BACH burst are one guard period in half-symbols (guard period in half-symbols). Half-symbol 5 to half-symbol 148 of the BACH burst are a BACH sequence (BACH sequence) Sj. Half-symbol 149 and half-symbol 150 of the BACH burst are idle bits (idle bits). Half-symbol 151 to half-symbol 155 of the BACH burst are one guard period in half-symbols (guard period in half-symbols). Therefore, if the terminal 100 needs to successfully parse out the enhanced paging request from the BACH channel, the terminal 100 needs to ensure that each of the 15 BACH bursts can be correctly successfully received on the BACH. Therefore, a time difference between the terminal 100 and the network device 200 needs to be less than or equal to a time length of one guard period in half-symbols (namely, 50/468 ms≈0.1 ms).

In a manner in which the terminal 100 performs time and frequency synchronization with the network device 200, the terminal 100 may receive, on a frequency correction channel (frequency correction channel, FCCH), a synchronization signal sent by the network device 200, and perform time and frequency correction on the terminal 100 by using the synchronization signal, so that time and frequency of the terminal 100 are synchronized with time and frequency of the network device 200.

To implement the following case: When the quality of the air interface link between the terminal 100 and the network device 200 is poor, the terminal 100 may demodulate the enhanced paging request on the BACH even if the terminal 100 cannot demodulate the paging request on a PCCH, a signal-to-noise ratio (namely, a demodulation threshold) required by the terminal 100 to demodulate the enhanced paging request on the BACH is far lower than a signal-to-noise ratio required by the terminal 100 to demodulate the paging request on the PCCH. Generally, a signal-to-noise ratio (namely, a demodulation threshold) required by the terminal 100 to demodulate a synchronization signal on the FCCH is slightly lower than the signal-to-noise ratio required by the terminal 100 to demodulate the paging request on the PCCH. However, the signal-to-noise ratio (namely, the demodulation threshold) required by the terminal 100 to demodulate the synchronization signal on the FCCH is still higher than the signal-to-noise ratio required by the terminal 100 to demodulate the enhanced paging request on the BACH. Therefore, when the quality of the air interface link between the terminal 100 and the network device 200 deteriorates, channel quality of downlink channels such as the BACH, the FCCH, and the PCCH deteriorates. When the signal-to-noise ratio of the BACH satisfies the demodulation threshold of the enhanced paging request, but the signal-to-noise ratio of the synchronization signal on the FCCH cannot satisfy the demodulation threshold of the synchronization signal, the terminal 100 cannot successfully demodulate the synchronization signal on the FCCH, and therefore cannot correct time and frequency of a local clock of the terminal 100. In this case, the terminal 100 cannot synchronize the time and frequency of the clock of the terminal 100 with time and frequency of a clock of the network device 200. As a result, the terminal 100 cannot successfully demodulate the enhanced paging request on the BACH. In this case, the terminal 100 cannot receive the enhanced paging request sent by the terminal 100 for a long time. As a result, the network device 200 fails to page the terminal 100.

Therefore, according to the communication method provided in this embodiment of this application, the location of the terminal 100, a 1PPS signal, precise timing, and a location of the network device 200 that are output by a positioning system inside the terminal 100 can be used to maintain synchronization between time and frequency of the communication service on the terminal 100 and time and frequency of the network device 200, so that the terminal 100 can receive, at accurate time and frequency, a downlink signal sent by the network device 200, to increase a probability of successfully receiving, by the terminal 100, the enhanced paging request or the paging request sent by the network device 200, and increase a success rate of paging the terminal 100 by the network device 200.

The following describes a chip system according to an embodiment of this application.

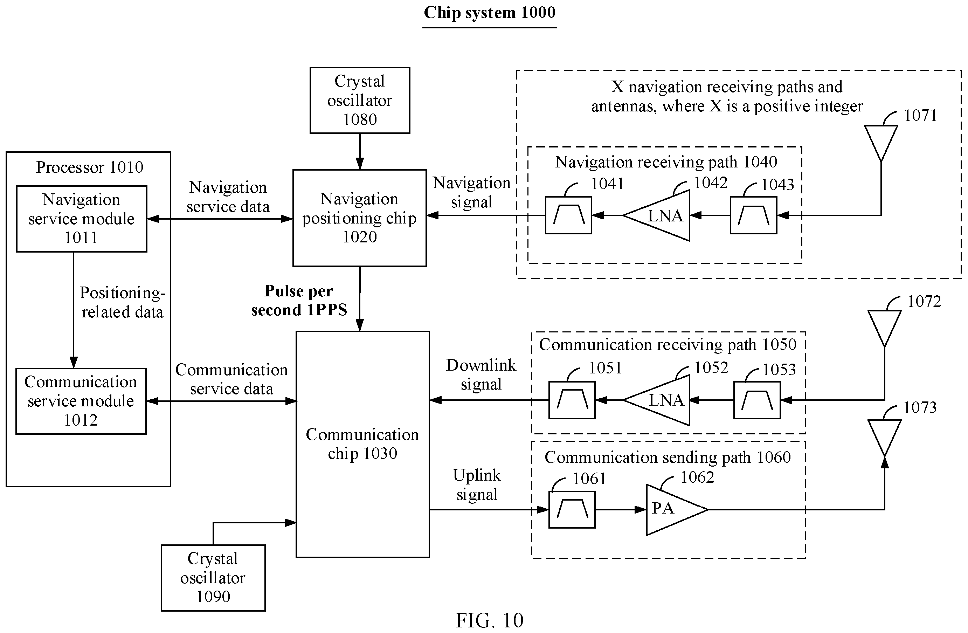

FIG. 10 is a diagram of an architecture of a chip system according to an embodiment of this application.

As shown in FIG. 10, the chip system 1000 may be used in a terminal 100. The chip system 1000 may include a processor 1010, a navigation positioning chip 1020, a communication chip 1030, X navigation receiving paths 1040, a communication receiving path 1050, a communication sending path 1060, X antennas 1071, an antenna 1072, an antenna 1073, a crystal oscillator 1080, and a crystal oscillator 1090. X is a positive integer.

A navigation service module 1011 and a communication service module 1012 may run in the processor 1010.

The antenna 1071 may be configured to convert a navigation signal in an electromagnetic wave form into a navigation signal in a radio frequency form. The navigation receiving path 1040 may convert the navigation signal in the radio frequency form into a navigation signal in a digital signal form, and input the navigation signal in the digital signal form to the navigation positioning chip 1020.

In some embodiments, the navigation receiving path 1040 may include a band-pass filter 1041, a low noise amplifier (low noise amplifier, LNA) 1042, and a band-pass filter 1043. An input end of the band-pass filter 1041 is directly or indirectly connected to an output end of the low noise amplifier 1042, and an output end of the band-pass filter 1041 is directly or indirectly connected to the navigation positioning chip 1020. An input end of the band-pass filter 1043 is directly or indirectly connected to the antenna 1071, and an output end of the band-pass filter 1043 is directly or indirectly connected to an input end of the low noise amplifier 1042.

In an example, the chip system 1000 may support receiving of multi-band navigation signals. Therefore, the navigation positioning chip 1020 may be connected to a plurality of navigation receiving paths 1040, each navigation receiving path 1040 is connected to one antenna 1071, and different navigation receiving paths 1040 are connected to different antennas 1071. Different navigation receiving paths 1040 may be configured to receive navigation signals of different frequency bands.

The antenna 1072 may convert a downlink signal in an electromagnetic wave form sent by the network device 200 into a downlink signal in a radio frequency form. The communication receiving path 1050 may convert the downlink signal in the radio frequency form into a downlink signal in a digital signal form, and input the downlink signal in the digital signal form to the communication chip 1030.

In some embodiments, the communication receiving path 1050 may include a band-pass filter 1051, a low noise amplifier 1052, and a band-pass filter 1053. An input end of the band-pass filter 1051 is directly or indirectly connected to an output end of the low noise amplifier 1052, and an output end of the band-pass filter 1051 is directly or indirectly connected to a receiving interface on the communication chip 1030. An input end of the band-pass filter 1053 is directly or indirectly connected to the antenna 1072, and an output end of the band-pass filter 1053 is directly or indirectly connected to an input end of the low noise amplifier 1052.

The communication chip 1030 may input an uplink signal in a digital signal form to the communication sending path 1060. The communication sending path 1060 may convert the uplink signal in the digital signal form into an uplink signal in a radio frequency form, and input the uplink signal in the radio frequency form to the antenna 1073. The antenna 1073 may convert the uplink signal in the radio frequency form into an uplink signal in an electromagnetic wave form, and send the uplink signal in the electromagnetic wave form to the network device 200.

In some embodiments, the communication sending path 1060 may include a band-pass filter 1061 and a power amplifier 1062. An output end of the band-pass filter 1061 is directly or indirectly connected to an input end of the power amplifier 1062, and an input end of the band-pass filter 1061 is directly or indirectly connected to a sending interface on the communication chip 1030. An output end of the power amplifier 1062 is directly or indirectly connected to the antenna 1073.

After having received a navigation signal, the navigation positioning chip 1020 may exchange navigation service data with the navigation service module 1011 to complete positioning of the terminal 100.

The communication chip 1030 may exchange communication service data with the communication service module 1012. For example, the communication chip 1030 may capture a downlink signal, perform decoding and protocol parsing on the downlink signal after successfully capturing the downlink signal, to obtain data content, and send the data content to the communication service module 1012. After having received user data, the communication service module 1012 may output the user data to a user. For example, the data content may be an SMS message, and the SMS message is displayed. For another example, the communication service module 1012 may further transmit to-be-sent data content to the communication chip 1030. The communication chip 1030 may perform protocol encapsulation, encoding, modulation, and spreading on the to-be-sent data content to obtain an uplink signal, and send the uplink signal to the network device 200 through the communication sending path 1060 and the antenna 1073.

In some embodiments, the navigation service module 1011 may send positioning-related data to the communication service module 1012. For example, the positioning-related data may include location information of the terminal 100. The navigation service module 1011 may obtain location information of the network device 200. The navigation service module 1011 may transmit the location information of the terminal 100 and the location information of the network device 200 to the communication chip 1030. In an example, if the communication chip 1030 performs satellite communication with the network device 200, the location information of the network device 200 may include ephemeris information of a communication satellite 21 and location information of a satellite communication ground device 22. In another example, if the communication chip 1030 performs cellular communication with the network device 200, the location information of the network device 200 may include location information of a base station of the network device 200.

The navigation positioning chip 1020 may send a pulse per second (1PPS) signal to the communication chip 1030.

The crystal oscillator 1090 may be configured to provide a clock signal for the navigation positioning chip 1020. A type of the crystal oscillator 1080 is not limited. For example, the crystal oscillator 1080 may be a common crystal oscillator (common crystal oscillator, SPXO), a voltage controlled crystal oscillator (voltage controlled crystal oscillator, VCXO), a temperature compensated crystal oscillator (temperature compensated crystal oscillator, TCXO), an oven controlled crystal oscillator (oven controlled crystal oscillator, OCXO), or the like.

The crystal oscillator 1090 may be configured to provide a clock signal for the communication chip 1030. A type of the crystal oscillator 1090 is not limited. For example, the crystal oscillator 1090 may be an SPXO, a VCXO, a TCXO, an OCXO, or the like.

Based on the chip system 1000 shown in FIG. 10, the following describes a time and frequency synchronization procedure of a communication method according to an embodiment of this application.

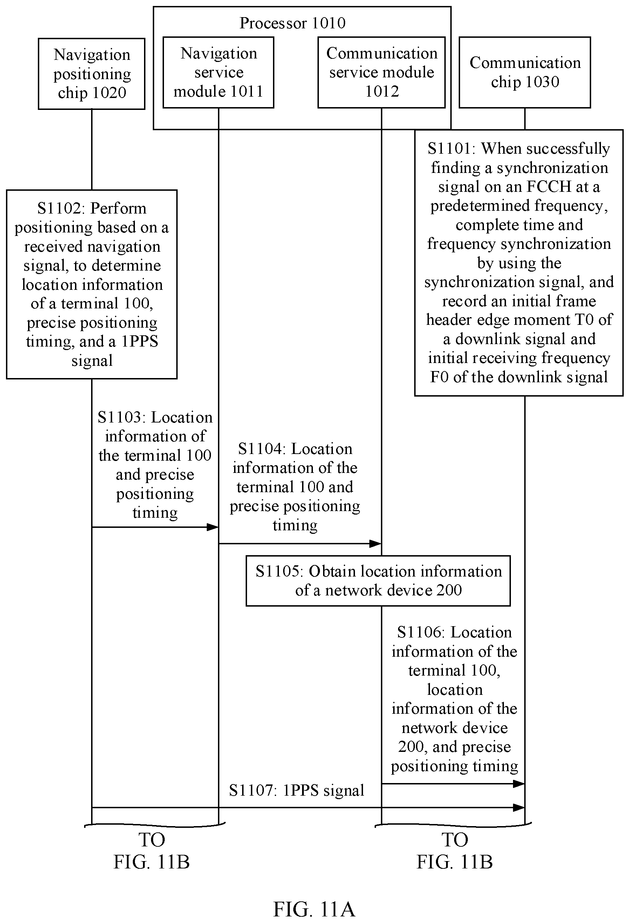

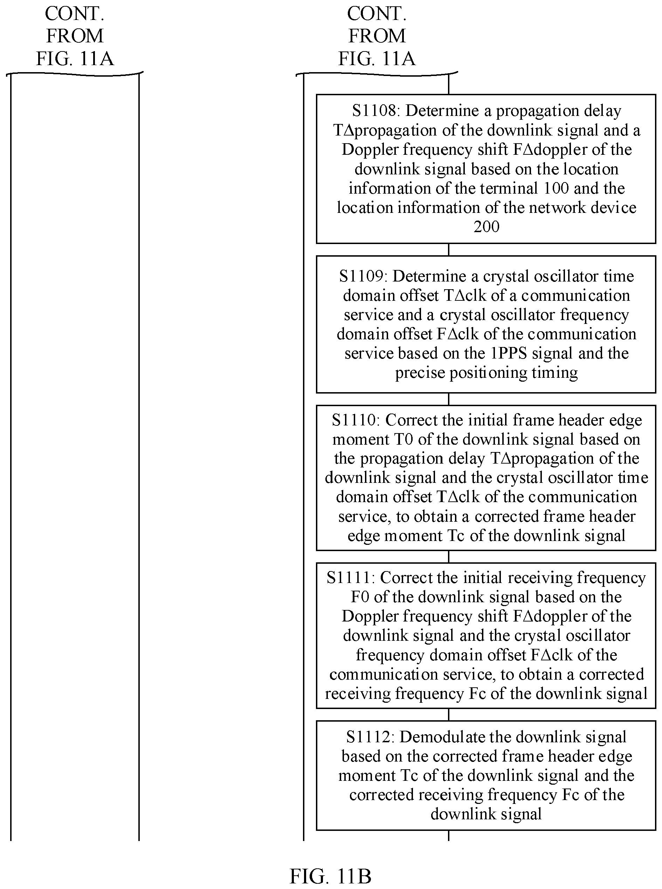

FIG. 11A and FIG. 11B are a diagram of a time and frequency synchronization procedure of a communication method according to an embodiment of this application.

As shown in FIG. 11A and FIG. 11B, the time and frequency synchronization procedure of the communication method may include the following steps.

S1101: When successfully finding a synchronization signal on an FCCH at a predetermined frequency, the communication chip 1030 completes time and frequency synchronization by using the synchronization signal, and records an initial frame header edge moment T0 of a downlink signal and initial receiving frequency F0 of the downlink signal.

The downlink signal may include any one of signals on downlink channels such as a paging request on a PCCH and an enhanced paging request on a BACH.

S1102: The navigation positioning chip 1020 performs positioning based on a received navigation signal, to determine location information of the terminal 100, precise positioning timing, and a 1PPS signal.

When performing positioning based on the received navigation signal, the navigation positioning chip 1020 may obtain the precise positioning timing and the 1PPS signal of a satellite navigation system. The navigation positioning chip 1020 may obtain the 1PPS signal of the satellite navigation system every second.

S1103: The navigation positioning chip 1020 sends the location information of the terminal 100 and the precise positioning timing to the navigation service module 1011.

S1104: The navigation service module 1011 sends the location information of the terminal 100 and the precise positioning timing to the communication service module 1012.

S1105: The communication service module 1012 obtains location information of the network device 200.

In an example, if the communication chip 1030 performs satellite communication with the network device 200, the location information of the network device 200 may include ephemeris information of a communication satellite 21 and location information of a satellite communication ground device 22.

In another example, if the communication chip 1030 performs cellular communication with the network device 200, the location information of the network device 200 may include location information of a base station that is of the network device 200 and that is closest to the terminal 100. The terminal 100 preferentially receives a downlink signal from the base station closest to the terminal 100, and performs signaling interaction with the base station closest to the terminal 100. The communication service module 1012 may obtain location information of a plurality of base stations of the network device 200 in advance. Then, the communication service module 1012 may determine, from the plurality of base stations based on the location information of the terminal 100 and the location information of the plurality of base stations, the location information of the base station closest to the terminal 100.

S1106: The communication service module 1012 sends the location information of the terminal 100, the location information of the network device 200, and the precise positioning timing to the communication chip 1030.

S1107: The navigation positioning chip 1020 may send the 1PPS signal to the communication chip 1030.

The navigation positioning chip 1020 may send the 1PPS signal to the communication chip 1030 once every second.

S1108: The communication chip 1030 determines a propagation delay *T*_{Δ*propagation*} of the downlink signal and a Doppler frequency shift *F*_{Δ*doppler*} of the downlink signal based on the location information of the terminal 100 and the location information of the network device 200.

The communication chip 1030 may determine a propagation distance R of the downlink signal based on the location information of the terminal 100 and the location information of the network device 200.

In an example, if the communication chip 1030 performs satellite communication with the network device 200, the propagation distance R of the downlink signal may be a sum of a distance Ra from the terminal 100 to the communication satellite 21 of the network device 200 and a distance Rb from the communication satellite 21 to the satellite communication ground device 22.

In an example, if the communication chip 1030 performs cellular communication with the network device 200, the propagation distance R of the downlink signal may be a distance Rc from the terminal 100 to the base station that is of the network device 200 and that is closest to the terminal 100.

The propagation delay *T*_{Δ*propagation*} of the downlink signal may be determined by using the following formula (1): ${T}_{Δ propagation} = R / C$ Formula (1)

In the foregoing formula (1), R is a transmission distance of the downlink signal from the network device 200 to the terminal 100, and C is a transmission speed of an electromagnetic wave, namely, a speed of light.

In an example, if the communication chip 1030 performs satellite communication with the network device 200, a movement speed V1 of the network device 200 may be a radial speed of the communication satellite 21 of the network device 200. The communication chip 1030 may determine, based on the ephemeris information of the communication satellite 21, the radial speed of the communication satellite 21 at a moment of receiving the downlink signal. The radial speed of the communication satellite 21 is a main cause of the Doppler frequency offset. Therefore, the communication chip 1030 may determine the movement speed V1 of the network device 200 based on the location information of the network device 200.

The communication chip 1030 may determine the Doppler frequency shift *F*_{Δ*doppler*} of the downlink signal based on the movement speed V of the network device 200 and frequency Ft of the downlink signal. The Doppler frequency shift *F*_{Δ*doppler*} of the downlink signal may be determined by using the following formula (2): ${F}_{Δ doppler} = \frac{V 1}{C} * {F}_{t}$ Formula (2)

In the foregoing formula (2), *F*_{Δ*doppler*} is the Doppler frequency shift of the downlink signal, V1 is the movement speed of the network device 200, and *Fₜ* is the frequency *Fₜ* of the downlink signal.

In an example, if the communication chip 1030 performs cellular communication with the network device 200, a location of a base station of the network device 200 is generally fixed. A movement speed of the terminal 100 is a main cause of the Doppler frequency offset. Therefore, the communication chip 1030 may determine, based on a change of the location information of the terminal 100, the Doppler frequency offset *F*_{Δ*doppler*} of the downlink signal at the moment of receiving the downlink signal. The Doppler frequency shift *F*_{Δ*doppler*} of the downlink signal may be determined by using the following formula (3): ${F}_{Δ clk} = \frac{V 2}{C} * {F}_{t}$ Formula (3)

In the foregoing formula (3), *F*_{Δ*doppler*} is the Doppler frequency shift of the downlink signal, V2 is the movement speed of the terminal 100, and *Fₜ* is the frequency *Fₜ* of the downlink signal.

S1109: The communication chip 1030 determines a crystal oscillator time domain offset *T*_{Δ*clk*} of a communication service and a crystal oscillator frequency domain offset *F*_{Δ*clk*} of the communication service based on the 1PPS signal and the precise positioning timing.

The communication chip 1030 may determine the crystal oscillator time domain offset *T*_{Δ*clk*} of the communication service based on clock time output by a crystal oscillator of the communication service and the precise positioning timing. The crystal oscillator time domain offset *T*_{Δ*clk*} of the communication service is a difference between the clock time output by the crystal oscillator and the precise positioning timing.

The communication chip 1030 may record a quantity *N_{clk}* of clock signals output by the crystal oscillator (for example, the crystal oscillator 1090) of the communication service and a quantity *N*_{1*pps*} of 1PPS signals in a counting time period. The communication chip 1030 may determine the crystal oscillator frequency domain offset *F*_{Δ*clk*} of the communication service based on the quantity *N_{clk}* of clock signals output by the crystal oscillator of the communication service , the quantity *N*_{1*pps*} of 1PPS signals, and operating frequency *F_{clk}* of the crystal oscillator (for example, the crystal oscillator 1090) of the communication service in the counting time period.

The crystal oscillator frequency domain offset *F*_{Δ*clk*} of the communication service may be determined by using the following formula (4): $\frac{{F}_{Δ clk}}{{F}_{clk}} = \frac{{N}_{clk} - {N}_{1 pps}}{{N}_{1 pps}} = \frac{{N}_{Δ}}{{N}_{1 pps}}$ Formula (4)

In the foregoing formula (4), *F*_{Δ*clk*} is the crystal oscillator frequency domain offset *F*_{Δ*clk*} of the communication service, *N_{clk}* is the quantity of clock signals output by the crystal oscillator of the communication service in the counting time period, *N*_{1*pps*} is the quantity of 1PPS signals in the counting time period, and *F_{clk}* is the operating frequency of the crystal oscillator (for example, the crystal oscillator 1090) of the communication service. *N*_{Δ} is a difference between the quantity of clock signals output by the crystal oscillator of the communication service and the quantity of 1PPS signals in the counting time period, and precision of *N*_{Δ} may be 1. In an example, if *F_{clk}* is 38.4 MHz, precision of *F*_{Δ*clk*} is about 26 ppb. If the precision of *F*_{Δ*clk*} needs to be improved, a value of *F_{clk}* may be increased to n times (namely, 38.4*n MHz) of an original value, so that the precision of *F*_{Δ*clk*} is more refined. In this case, the precision of *F*_{Δ*clk*} is about $\frac{26}{n}$ (ppb).

S1110: The communication chip 1030 corrects the frame header edge moment T0 of the downlink signal based on the propagation delay *T*_{Δ*propagation*} of the downlink signal and the crystal oscillator time domain offset *T*_{Δ*clk*} of the communication service, to obtain a corrected frame header edge moment Tc of the downlink signal.

The corrected frame header edge moment Tc of the downlink signal may be determined by using the following formula (5): $Tc = T 0 + {T}_{Δ propagation} + {T}_{Δ clk}$ Formula (5)

In the foregoing formula (5), Tc is the corrected frame header edge moment of the downlink signal, T0 is the initial frame header edge moment of the downlink signal, *T*_{Δ*propagation*} is the propagation delay of the downlink signal, and *T*_{Δ*clk*} is the crystal oscillator time domain offset of the communication service.

S1111: The communication chip 1030 corrects the initial receiving frequency F0 of the downlink signal based on the Doppler frequency shift *F*_{Δ*doppler*} of the downlink signal and the crystal oscillator frequency domain offset *F*_{Δ*clk*} of the communication service, to obtain a corrected receiving frequency Fc of the downlink signal.

The corrected receiving frequency Fc of the downlink signal may be determined by using the following formula (6): $Fc = F 0 + {F}_{Δ doppler} + {F}_{Δ clk}$ Formula (6)

In the foregoing formula (6), Fc is the corrected receiving frequency of the downlink signal, F0 is the initial receiving frequency of the downlink signal, *F*_{Δ*doppler*} is the Doppler frequency shift of the downlink signal, and *F*_{Δ*clk*} is the crystal oscillator frequency domain offset of the communication service.

S1112: The communication chip 1030 demodulates the downlink signal based on the corrected frame header edge moment Tc of the downlink signal and the corrected receiving frequency Fc of the downlink signal.

According to the communication method provided in this embodiment of this application, a location of the terminal 100, a 1PPS signal, precise timing, and a location of the network device 200 that are output by a positioning system inside the terminal 100 can be used to maintain synchronization between time and frequency of the communication service on the terminal 100 and time and frequency of the network device 200, so that the terminal 100 can receive, at accurate time and frequency, a downlink signal sent by the network device 200, to increase a probability of successfully receiving, by the terminal 100, the enhanced paging request or the paging request sent by the network device 200, and increase a success rate of paging the terminal 100 by the network device 200.

The following describes a mechanism of transmitting an enhanced paging request on a BACH according to an embodiment of this application.

In an example, for example, in the GMR protocol, a network device 200 may send the enhanced paging request on the BACH in a spreading and modulation manner, to ensure that a terminal 100 can successfully receive the enhanced paging request on the BACH to the greatest extent even when channel quality of the BACH deteriorates due to blocking or another case. A data length of the enhanced paging request sent on the BACH is 36 bits (bits). When sending the enhanced paging request on the BACH, the network device 200 may encode the 36-bit data to obtain 60 encoded output bits. Each BACH burst on the BACH occupies two timeslots (timeslots). Each BACH burst carries one group of encoded output bits through spreading and modulation, and one group of encoded output bits includes four encoded output bits. One group of encoded output bits corresponds to one BACH sequence *Sⱼ*. Each BACH sequence includes 18 senary code element symbols, and each senary code element symbol in each BACH sequence is repeated six times. One enhanced paging request needs to be transmitted by using 15 BACH bursts. In this way, one 36-bit enhanced paging request may be spread to 1620 code element symbols, and more burst timeslots and sending duration are used on the BACH, to increase a success rate of successfully receiving the enhanced paging request by the terminal 100 in a case that quality of an air interface link between the terminal 100 and the network device 200 is poor.

In conclusion, compared with that of a paging request, a channel gain of the enhanced paging request is $10 log \left(\frac{60}{36}\times \frac{18}{4}\times 6\right) = 10 log \left(\frac{1620}{36}\right) \approx 16.5$ dB.

For example, the BACH sequence may be shown in Table 1.

**Table 1**

| BACH sequence *Sⱼ* | Code element symbols |
|---|---|
| *S*₀ | 030303030303030303 |
| *S*₁ | 001122001122001122 |
| *S*₂ | 031524031524031524 |
| *S*₃ | 002211002211002211 |
| *S₄* | 032415032415032415 |
| *S*₅ | 000000111111222222 |
| *S*₆ | 030303151515242424 |
| *S*₇ | 001122112200220011 |
| *S*₈ | 031524152403240315 |
| *S*₉ | 002211110022221100 |
| *S*₁₀ | 032415150324241503 |
| *S*₁₁ | 000000222222111111 |
| *S*₁₂ | 030303242424151515 |
| *S*₁₃ | 001122220011112200 |
| *S*₁₄ | 031524240315152403 |
| *S*₁₅ | 002211221100110022 |

It can be learned from Table 1 that there may be 16 BACH sequences, and each BACH sequence includes 18 senary code element symbols. One enhanced paging request may include 15 BACH sequences. Table 1 is merely used as an example for explaining this application, and should not constitute a limitation.

For example, for a sending occasion of the BACH burst, refer to Table 2.

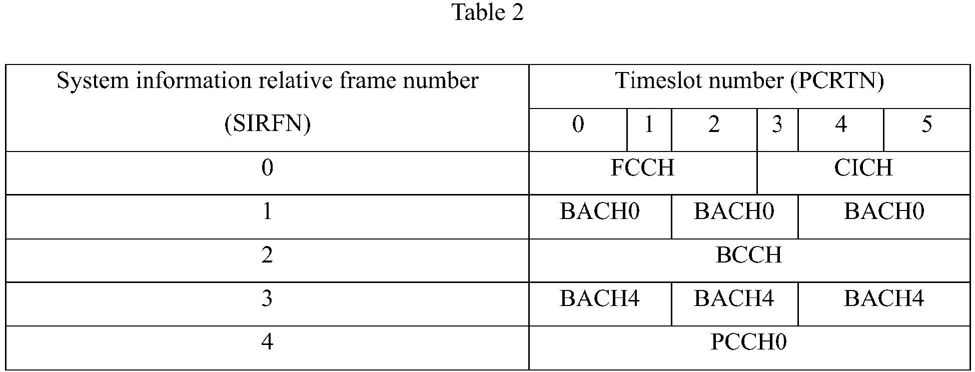

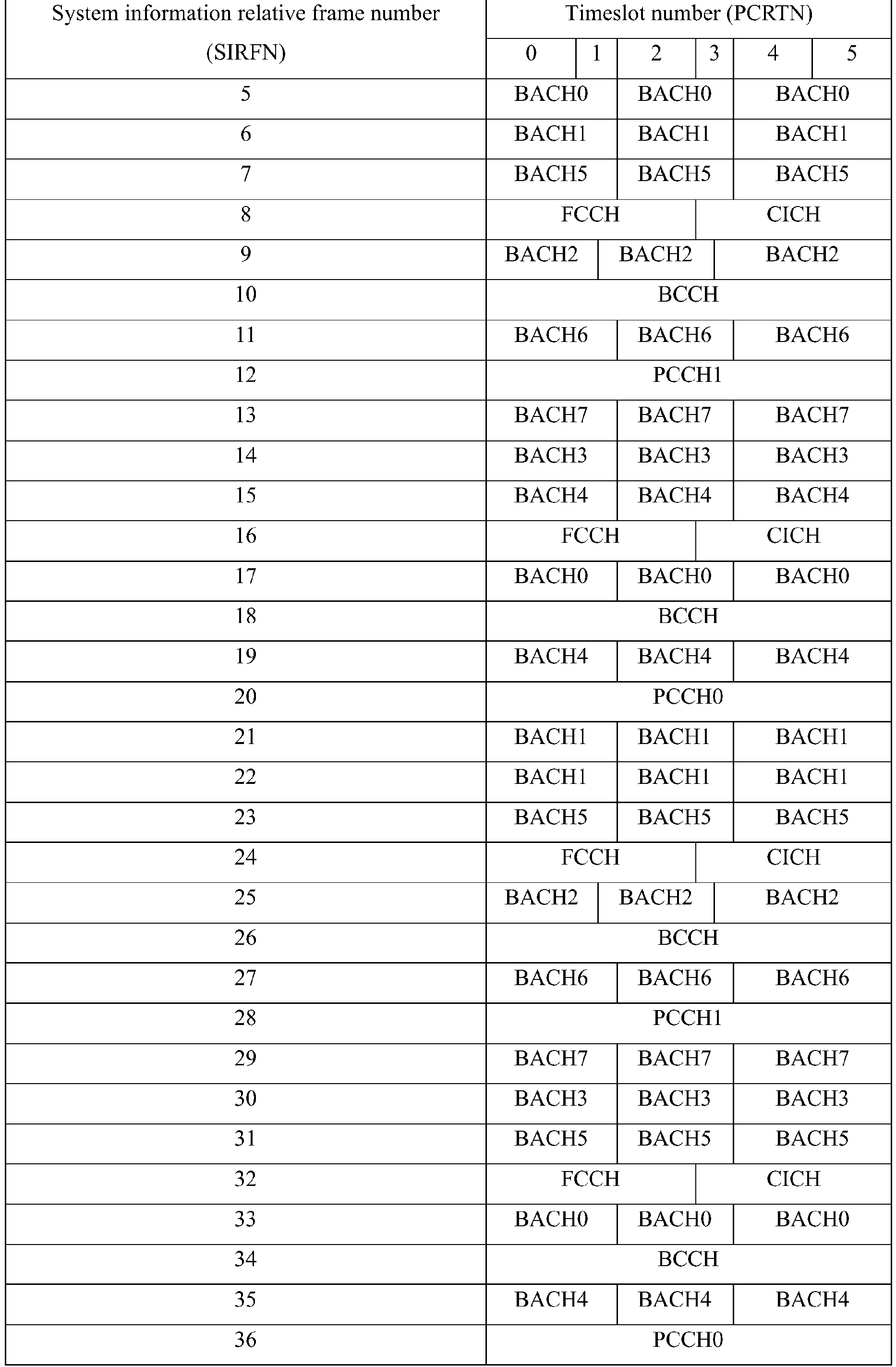

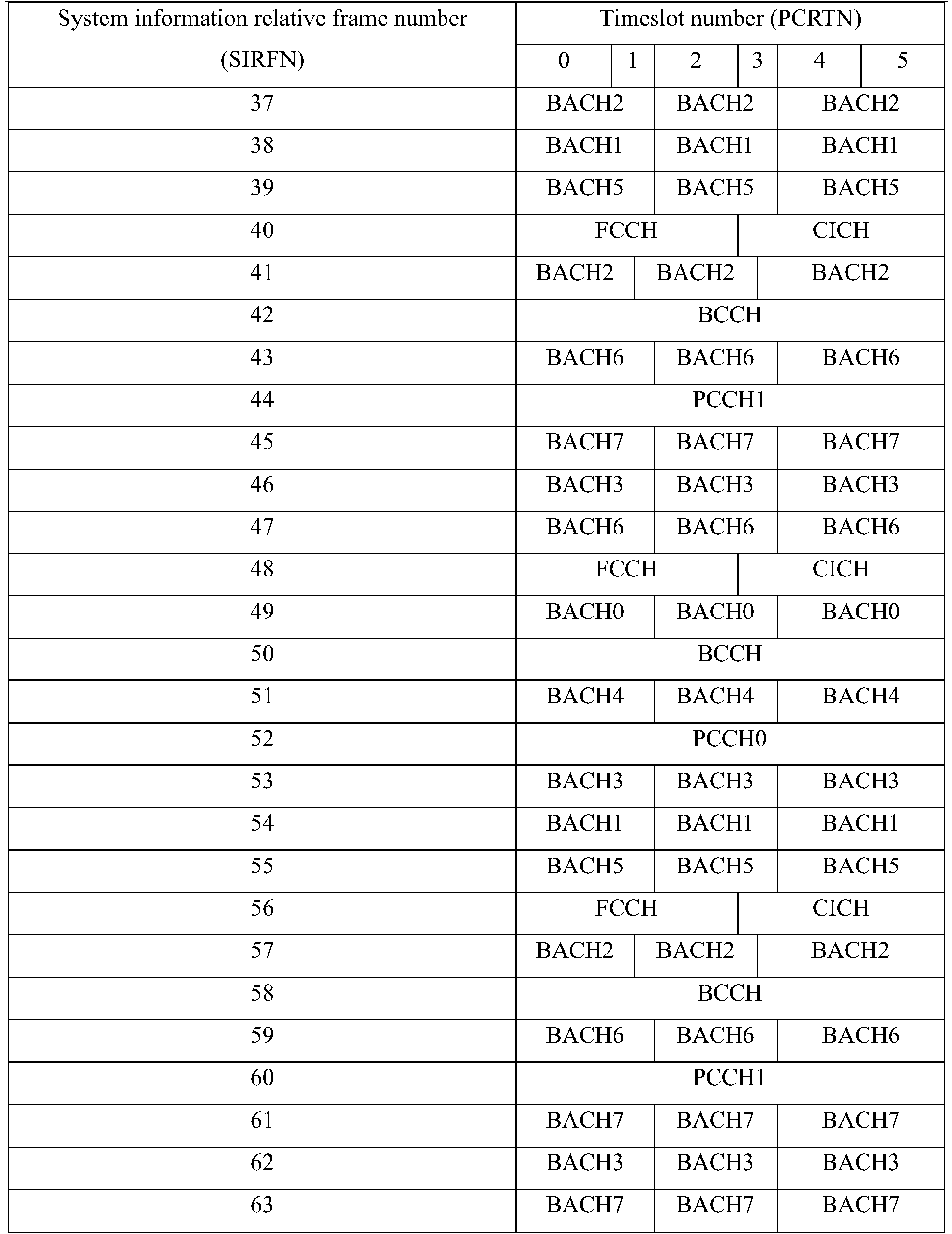

It can be learned from Table 2 that one system information relative frame number may include six timeslots (timeslots). Downlink channels may include channels such as the BACH, an FCCH, a BCCH, and a PCCH. For example, there may be eight BACHs, which are respectively BACH0, BACH1, BACH2, BACH3, BACH4, BACH5, BACH6, and BACH7. The network device 200 may send the enhanced paging request to different terminals on different BACHs. Each BACH burst on each BACH may occupy two timeslots. For example, the network device 200 may send, on BACH0 in timeslots corresponding to a system information relative frame number 1, a system information relative frame number 5, a system information relative frame number 17, a system information relative frame number 33, and a system information relative frame number 49, 15 BACH bursts corresponding to one enhanced paging request. The network device 200 may send, on BACH1 in timeslots corresponding to a system information relative frame number 6, a system information relative frame number 21, a system information relative frame number 22, a system information relative frame number 38, and a system information relative frame number 54, 15 BACH bursts corresponding to one enhanced paging request. The network device 200 may send, on BACH2 in timeslots corresponding to a system information relative frame number 9, a system information relative frame number 25, a system information relative frame number 37, a system information relative frame number 41, and a system information relative frame number 57, 15 BACH bursts corresponding to one enhanced paging request. The network device 200 may send, on BACH3 in timeslots corresponding to a system information relative frame number 14, a system information relative frame number 30, a system information relative frame number 46, a system information relative frame number 53, and a system information relative frame number 62, 15 BACH bursts corresponding to one enhanced paging request. The network device 200 may send, on BACH4 in timeslots corresponding to a system information relative frame number 3, a system information relative frame number 15, a system information relative frame number 19, a system information relative frame number 35, and a system information relative frame number 51, 15 BACH bursts corresponding to one enhanced paging request. The network device 200 may send, on BACH5 in timeslots corresponding to a system information relative frame number 7, a system information relative frame number 23, a system information relative frame number 31, a system information relative frame number 39, and a system information relative frame number 55, 15 BACH bursts corresponding to one enhanced paging request. The network device 200 may send, on BACH6 in timeslots corresponding to a system information relative frame number 11, a system information relative frame number 27, a system information relative frame number 43, a system information relative frame number 47, and a system information relative frame number 59, 15 BACH bursts corresponding to one enhanced paging request. The network device 200 may send, on BACH7 in timeslots corresponding to a system information relative frame number 13, a system information relative frame number 29, a system information relative frame number 45, a system information relative frame number 61, and a system information relative frame number 63, 15 BACH bursts corresponding to one enhanced paging request. Table 2 is merely used as an example for explaining this application, and should not constitute a limitation.

It can be learned from the sending occasion of the BACH burst shown in Table 2 that sending occasions of 15 BACH bursts included in one enhanced paging request on the BACH are bursty and inconsecutive. Therefore, the terminal 100 may independently demodulate a code element sequence in each BACH burst based on 16 pre-stored code element sequences. One BACH burst corresponds to one code element sequence. One code element sequence includes 18 code element symbols. After demodulating 15 BACH bursts on a same BACH, the terminal 100 may parse out the enhanced paging request from code element sequences of the 15 BACH bursts on the same BACH. The terminal 100 may determine whether a receiver of the parsed enhanced paging request is the terminal 100. If the receiver of the parsed enhanced paging request is the terminal 100, the terminal 100 may determine that the enhanced paging request has been received. If the receiver of the enhanced paging request parsed out by the terminal 100 is not the terminal 100, the terminal 100 may determine that the enhanced paging request has not been received.

However, if an error occurs when the terminal 100 demodulates the BACH burst, an error also occurs in the enhanced paging request parsed out from the code element sequences of the 15 BACH bursts on the same BACH. Consequently, the terminal 100 cannot normally successfully receive the enhanced paging request whose receiver is the terminal 100.

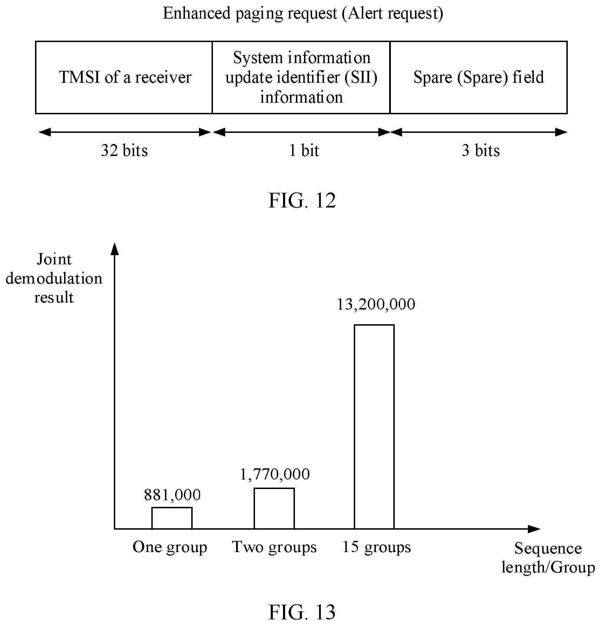

FIG. 12 is a diagram of a content format of an enhanced paging request according to an embodiment of this application.

As shown in FIG. 12, the enhanced paging request may include a temporary international mobile subscriber identity (TMSI) of a receiver, system information update identifier (system information update identifier, SII) information, and a spare field. A data length of the enhanced paging request may be 36 bits, a data length of the TMSI of the receiver may be 32 bits, a data length of the SII information may be 1 bit, and a data length of the spare field may be 3 bits. The data length of the TMSI of the receiver is longer than a sum of the data length of the SII information and the data length of the spare field. A terminal 100 has locally stored a TMSI allocated by a network device 200 to the terminal 100. The SII information and the spare field are generally fixed values. Even if the SII information and the spare field change, the change of the SII information and the spare field is limited.

Therefore, in the communication method provided in this embodiment of this application, the terminal 100 may generate an enhanced paging request sample based on the TMSI of the terminal 100 and the content format of the enhanced paging request. Then, the terminal 100 may perform spreading, modulation, and encoding on the enhanced paging request sample, to generate a symbol sequence x2(n) of the enhanced paging request sample. The symbol sequence x2(n) of the enhanced paging request sample may include n symbols (for example, 1620 symbols). The terminal 100 may receive the n symbols on a same BACH channel, and splice the n symbols into a data block x1(n) in a receiving-time order. Then, the terminal 100 may perform joint demodulation on the data block x1(n) based on the symbol sequence x2(n) corresponding to the enhanced paging request sample. In this way, a success rate of demodulating a BACH burst by the terminal 100 can be increased, so that a success rate of successfully receiving the enhanced paging request by the terminal 100 is increased.

For example, a joint demodulation result may be represented by using the following formula (7): $y = \left|{\sum }_{n = 1}^{N} {x}_{1} \left(n\right) {x}_{2}^{*} \left(n\right)\right|$ Formula (7)

In the foregoing formula (7), x1(n) is a BACH data block obtained by splicing n symbols received by the terminal 100 on a same BACH channel, and x2(n) is a symbol sequence x2(n) of an enhanced paging request sample.

FIG. 13 is a diagram of joint demodulation results of sequences of different lengths according to an embodiment of this application.

As shown in FIG. 13, when a length of a symbol sequence is one group of symbols (namely, 6*18=108 symbols), a joint demodulation result may be 881,000. When a length of a symbol sequence is two groups of symbols (namely, 2*6*18=216 symbols), a joint demodulation result may be 1,770,000. When a length of a symbol sequence is 15 groups of symbols, a joint demodulation result may be 13,200,000. A larger value of the joint demodulation result indicates a better demodulation effect. When the length of the symbol sequence is 15 groups of symbols, a demodulation gain of 10log(15)≈11.7 dB can be theoretically increased when the terminal 100 demodulates the enhanced paging request on the BACH.

The foregoing content describes in detail the method provided in this application. To better implement the foregoing solutions in embodiments of this application, embodiments of this application further provide a corresponding apparatus or device.

In embodiments of this application, the terminal 100 and the network device 200 may be divided into functional modules based on the foregoing method examples, for example, each functional module may be obtained through division based on each corresponding function, or two or more functions may be integrated into one processing module. The integrated module may be implemented in a form of hardware, or may be implemented in a form of software functional module. It should be noted that, in embodiments of this application, module division is an example, and is merely a logical function division. During actual implementation, another division manner may be used.

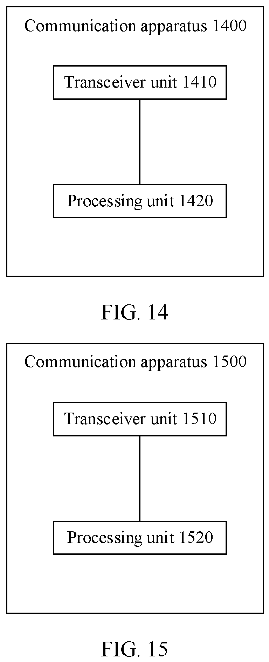

The following describes in detail the communication apparatuses in embodiments of this application with reference to FIG. 14 to FIG. 17.

When an integrated unit is used, FIG. 14 is a diagram of a structure of a communication apparatus 1400 according to an embodiment of this application. The communication apparatus 1400 may be the terminal 100 in the foregoing embodiments. Optionally, the communication apparatus 1400 may be a chip/chip system. As shown in FIG. 14, the communication apparatus 1400 may include a transceiver unit 1410 and a processing unit 1420.

The transceiver unit 1410 may be further configured to perform functional steps related to signaling sending, signaling receiving, and the like performed by the terminal 100 in the foregoing embodiments of this application.

Optionally, the processing unit 1420 may be further configured to perform functional steps related to interface or prompt displaying, or the like performed by the terminal 100 in the foregoing embodiments of this application.

It should be understood that the communication apparatus 1400 in this design may correspondingly perform the method steps performed by the terminal 100 in the foregoing embodiments. For brevity, details are not described herein again.

When an integrated unit is used, FIG. 15 is a diagram of a structure of a communication apparatus 1500 according to an embodiment of this application. The communication apparatus 1500 may be the network device 200 in the foregoing embodiments. As shown in FIG. 15, the communication apparatus 1500 may include a transceiver unit 1510 and a processing unit 1520.

Optionally, the transceiver unit 1510 may be further configured to perform functional steps related to signaling sending, signaling receiving, and the like performed by the network device 200 in the foregoing embodiments of this application.

Optionally, the processing unit 1520 may be further configured to perform functional steps related to communication service detection or processing, or the like performed by the network device 200 in the foregoing embodiments of this application.

It should be understood that the communication apparatus 1500 in this design may correspondingly perform the method steps performed by the network device 200 in the foregoing embodiments. For brevity, details are not described herein again.

The terminal 100 and the network device 200 in embodiments of this application are described above. It should be understood that any product in any form that has a function of the terminal 100 in FIG. 14 or any product in any form that has a function of the network device 200 in FIG. 15 shall fall within the protection scope of embodiments of this application.

In a possible product form, the terminal 100 in embodiments of this application may be implemented by using a general bus architecture.

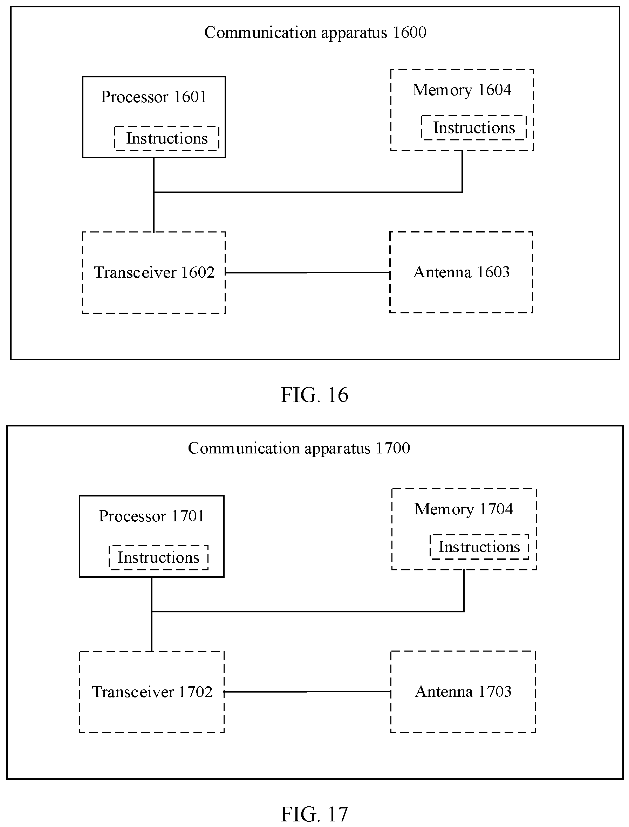

FIG. 16 is a diagram of a structure of a communication apparatus 1600 according to an embodiment of this application. The communication apparatus 1600 may be the terminal 100 or an apparatus in the terminal 100. As shown in FIG. 16, the communication apparatus 1600 includes a processor 1601 and a transceiver 1602 that is internally connected to and communicates with the processor 1601. The processor 1601 is a general-purpose processor, a dedicated processor, or the like. For example, the processor 1601 may be a communication chip. The transceiver 1602 may be referred to as a transceiver unit, a transceiver machine, a transceiver circuit, or the like, and is configured to implement a transceiver function. The transceiver 1602 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a transmitting function. Optionally, the communication apparatus 1600 may further include an antenna 1603 and/or a radio frequency unit (not shown in FIG. 16), for example, an antenna for cellular communication, an antenna for satellite communication, or a positioning antenna. The antenna 1603 and/or the radio frequency unit may be located inside the communication apparatus 1600, or may be separated from the communication apparatus 1600. In other words, the antenna 1603 and/or the radio frequency unit may be deployed remotely or in a distributed manner.

Optionally, the communication apparatus 1600 may include one or more memories 1604. The memory 1604 may store instructions. The instructions may be a computer program. The computer program may be run on the communication apparatus 1600, so that the communication apparatus 1600 performs the method steps described in the foregoing embodiments of this application. Optionally, the memory 1604 may further store data. The communication apparatus 1600 and the memory 1604 may be separately disposed, or may be integrated.

The processor 1601, the transceiver 1602, and the memory 1604 may be connected through a communication bus.

In a design, the communication apparatus 1600 may be configured to perform a function of the terminal 100 in the foregoing embodiments. The processor 1601 may be configured to perform functional steps related to signaling parsing, displaying, and the like performed by the terminal 100 in the foregoing embodiments of this application and/or another process in the technology described in this specification. The transceiver 1602 may be configured to perform functional steps related to signaling sending, signaling receiving, and the like performed by the terminal 100 in the foregoing embodiments of this application and/or another process in the technology described in this specification.

In any one of the foregoing designs, the processor 1601 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1601 may store instructions. The instructions may be a computer program. The computer program is run on the processor 1601, so that the communication apparatus 1600 can perform the method steps performed by the terminal 100 in the foregoing embodiments of this application. The computer program may be built into the processor 1601. In this case, the processor 1601 may be implemented by hardware.

In an implementation, the communication apparatus 1600 may include a circuit. The circuit may implement the sending, receiving, or communication function in the foregoing method embodiments. The processor and the transceiver that are described in this application may be implemented on an integrated circuit (integrated circuit, IC), an analog IC, a radio frequency integrated circuit RFIC, a mixed-signal IC, an application-specific integrated circuit (application-specific integrated circuit, ASIC), a printed circuit board (printed circuit board, PCB), or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited thereto, and a structure of the communication apparatus may not be limited by FIG. 16. The communication apparatus 1600 may be an independent device or may be a part of a large device. For example, the communication apparatus 1600 may be:
(1) an independent integrated circuit IC, a chip, a chip system, or a subsystem; (2) a set of one or more ICs, where optionally, the IC set may also include a storage component configured to store data and a computer program; (3) an ASIC, for example, an NFC chip; (4) a module that can be embedded in another device; (5) a receiver, a terminal, an intelligent terminal, a cellular phone, a wireless device, a handheld device, a mobile unit, a vehicle-mounted device, a network device, a cloud device, an artificial intelligence device, or the like; (6) or the like.

In a possible product form, the network device 200 in embodiments of this application may be implemented by using a general bus architecture.

FIG. 17 is a diagram of a structure of a communication apparatus 1700 according to an embodiment of this application. The communication apparatus 1700 may be the network device 200 or an apparatus in the network device 200. As shown in FIG. 17, the communication apparatus 1700 includes a processor 1701 and a transceiver 1702 that is internally connected to and communicates with the processor 1701. The processor 1701 is a general-purpose processor, a dedicated processor, or the like. For example, the processor 1701 may be an NFC controller. The transceiver 1702 may be referred to as a transceiver unit, a transceiver machine, a transceiver circuit, or the like, and is configured to implement a transceiver function. The transceiver 1702 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function. Optionally, the communication apparatus 1700 may further include an antenna 1703 and/or a radio frequency unit (not shown in FIG. 17). The antenna 1703 and/or the radio frequency unit may be located inside the communication apparatus 1700, or may be separated from the communication apparatus 1700. In other words, the antenna 1703 and/or the radio frequency unit may be deployed remotely or in a distributed manner.

Optionally, the communication apparatus 1700 may include one or more memories 1704. The memory 1704 may store instructions. The instructions may be a computer program. The computer program may be run on the communication apparatus 1700, so that the communication apparatus 1700 performs the method steps described in the foregoing embodiments of this application. Optionally, the memory 1704 may further store data. The communication apparatus 1700 and the memory 1704 may be separately disposed, or may be integrated.

The processor 1701, the transceiver 1702, and the memory 1704 may be connected through a communication bus.

In a design, the communication apparatus 1700 may be configured to perform a function of the network device 200 in the foregoing embodiments. The processor 1701 may be configured to perform functional steps related to signaling parsing and encapsulation, communication service detection and processing, and the like performed by the network device 200 in the embodiment shown in FIG. 17 and/or another process in the technology described in this specification. The transceiver 1702 may be configured to perform functional steps related to signaling sending, signaling receiving, and the like performed by the network device 200 in the embodiment shown in FIG. 17 and/or another process in the technology described in this specification.

In any one of the foregoing designs, the processor 1701 may include a transceiver configured to implement the receiving and sending functions. For example, the transceiver may be a transceiver circuit, an interface, or an interface circuit. The transceiver circuit, the interface, or the interface circuit configured to implement the receiving and sending functions may be separated, or may be integrated. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1701 may store instructions. The instructions may be a computer program. The computer program is run on the processor 1701, so that the communication apparatus 1700 can perform the method steps performed by the network device 200 in the foregoing method embodiments. The computer program may be built into the processor 1701. In this case, the processor 1701 may be implemented by hardware.

An embodiment of this application further provides a computer-readable storage medium. The computer-readable storage medium stores a computer program. When the computer program is executed by a processor, the steps performed by the terminal 100 in the foregoing method embodiments can be implemented.

An embodiment of this application further provides a computer-readable storage medium. The computer-readable storage medium stores a computer program. When the computer program is executed by a processor, the steps performed by the network device 200 in the foregoing method embodiments can be implemented.

An embodiment of this application further provides a computer program product, including a computer program. When the computer program is run on a computer, the computer is enabled to implement the steps performed by the terminal 100 in the foregoing method embodiments.

An embodiment of this application further provides a computer program product, including a computer program. When the computer program is run on a computer, the computer is enabled to implement the steps performed by the network device 200 in the foregoing method embodiments.

An embodiment of this application further provides a chip system. The chip system includes a processing circuit and an interface circuit. The interface circuit is configured to receive code instructions and transmit the code instructions to the processing circuit. The processing circuit is configured to run the code instructions, so that the chip system implements the steps performed by the terminal 100 in any method embodiment of this application. The chip system may be a single chip, or a chip module including a plurality of chips.

An embodiment of this application further provides a chip system. The chip system includes a processing circuit and an interface circuit. The interface circuit is configured to receive code instructions and transmit the code instructions to the processing circuit. The processing circuit is configured to run the code instructions, so that the chip system implements the steps performed by the network device 200 in any method embodiment of this application. The chip system may be a single chip, or a chip module including a plurality of chips.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to a part of technical features thereof, without departing from the scope of the technical solutions of embodiments of this application.

## Claims

1. A communication system, comprising a terminal and a network device, wherein
the network device is configured to send a paging request to the terminal when detecting a communication service for paging the terminal;
the network device is further configured to send an enhanced paging request to the terminal if a paging response that corresponds to the paging request and that is sent by the terminal has not been received;
the terminal is configured to: output a paging prompt in response to the enhanced paging request after having received the enhanced paging request, wherein the paging prompt is used to prompt a user for arrival of paging for the terminal and to adjust a posture and/or a use place of the terminal to connect to the network device; and
the terminal is further configured to send, to the network device after having received a downlink broadcast signal sent by the network device, a paging response corresponding to the enhanced paging request.

2. The communication system according to claim 1, wherein sending the enhanced paging request to the terminal if the paging response that corresponds to the paging request and that is sent by the terminal has not been received specifically comprises:
sending the enhanced paging request to the terminal if the paging response that corresponds to the paging request and that is sent by the terminal has not been received within first preset duration after the paging request is sent to the terminal.

3. The communication system according to claim 1, wherein the network device is further configured to perform a communication service with the terminal if the paging response corresponding to the enhanced paging request has been received within second preset duration after the enhanced paging request is sent to the terminal.

4. The communication system according to any one of claims 1 to 3, wherein the terminal is further configured to display a satellite alignment page after outputting the paging prompt, wherein the satellite alignment page comprises an alignment prompt, and the alignment prompt is used to prompt the user to adjust the posture of the terminal to be aligned with a communication satellite of the network device.

5. The communication system according to claim 4, wherein the terminal is further configured to display a navigation page after outputting the paging prompt, wherein the navigation page comprises a map and a navigation guidance prompt, and the navigation guidance prompt is used to prompt the user to take the terminal to an open area; and
the terminal is specifically configured to display the satellite alignment page after detecting that the terminal is in the open area.

6. The communication system according to any one of claims 1 to 5, wherein the terminal is further configured to output an adjustment prompt when detecting that the terminal does not perform signaling interaction with the network device within third preset duration, wherein the adjustment prompt is used by the user to adjust the posture and/or the use place of the terminal to connect to the network device.

7. The communication system according to any one of claims 1 to 6, wherein the terminal is further configured to: after performing the communication service with the network device, output the adjustment prompt if it is detected that a distance by which the terminal moves exceeds a preset distance threshold within a time period in which the terminal does not perform signaling interaction with the network device, wherein the adjustment prompt is used by the user to adjust the posture and/or the use place of the terminal to connect to the network device.

8. The communication system according to claim 7, wherein the preset distance threshold is a maximum straight-line distance within coverage of one satellite beam of the network device; or
the preset distance threshold is a maximum straight-line distance within coverage of one cell of the network device.

9. The communication system according to any one of claims 6 to 8, wherein the terminal is further configured to: after outputting the adjustment prompt, initiate an attach procedure to the network device if the downlink broadcast signal sent by the network device is detected.

10. The communication system according to claim 9, wherein the network device is further configured to: after completing the attach procedure with the terminal, reset an implicit detach timer and update and record a location of the terminal, wherein the third preset duration is less than timeout duration of the implicit detach timer, the implicit detach timer is used by the network device to record duration in which the terminal does not perform signaling interaction with the network device, and the network device marks the terminal as being in an unattached state if the implicit detach timer expires.

11. The communication system according to any one of claims 1 to 10, wherein the terminal is further configured to: before receiving the enhanced paging request sent by the network device, when successfully finding a synchronization signal on a frequency correction channel FCCH at a predetermined frequency, complete time and frequency synchronization by using the synchronization signal, and record an initial frame header edge moment of the enhanced paging request and initial receiving frequency of the enhanced paging request; and
receiving the enhanced paging request sent by the network device specifically comprises:
performing positioning on the terminal by using a received navigation signal, to determine location information of the terminal, precise positioning timing, and a pulse per second 1PPS signal;
determining a propagation delay of the enhanced paging request and a Doppler frequency shift of the enhanced paging request based on the location information of the terminal and location information of the network device;
determining a crystal oscillator time domain offset of the communication service and a crystal oscillator frequency domain offset of the communication service based on the 1PPS signal and the precise positioning timing;
correcting the initial frame header edge moment of the enhanced paging request based on the propagation delay of the enhanced paging request and the crystal oscillator time domain offset of the communication service, to obtain a corrected frame header edge moment of the enhanced paging request;
correcting the initial receiving frequency of the enhanced paging request based on the Doppler frequency shift of the enhanced paging request and the crystal oscillator frequency domain offset of the communication service, to obtain a corrected receiving frequency of the enhanced paging request; and
demodulating the enhanced paging request from a basic alerting channel based on the corrected frame header edge moment of the enhanced paging request and the corrected receiving frequency of the enhanced paging request.

12. The communication system according to claim 11, wherein demodulating the enhanced paging request from the basic alerting channel specifically comprises:
generating an enhanced paging request sample based on a temporary international mobile subscriber identity TMSI of the terminal and a content format of the enhanced paging request;
performing spreading, modulation, and encoding on the enhanced paging request sample to generate a symbol sequence of the enhanced paging request sample;
receiving a plurality of symbols on the basic alerting channel, wherein a quantity of the plurality of symbols is the same as a quantity of symbols in the symbol sequence of the enhanced paging request sample;
splicing the plurality of symbols into a data block in a receiving-time order; and
jointly demodulating the enhanced paging request from the data block based on the symbol sequence corresponding to the enhanced paging request sample.

13. The communication system according to any one of claims 1 to 12, wherein sending the enhanced paging request to the terminal comprises:
sending the enhanced paging request to the terminal on the basic alerting channel BACH; and
outputting the paging prompt in response to the enhanced paging request after having received the enhanced paging request comprises:
outputting the paging prompt in response to the enhanced paging request after having received the enhanced paging request on the BACH.

14. A communication method, applied to a terminal and comprising:
receiving an enhanced paging request sent by a network device;
outputting a paging prompt in response to the enhanced paging request, wherein the paging prompt is used to inform a user of arrival of paging for the terminal and to adjust a posture or a use place of the terminal to connect to the network device; and
sending a paging response to the network device after having received a downlink broadcast signal sent by the network device.

15. The method according to claim 14, wherein after sending the paging response to the network device, the method further comprises:
performing a communication service with the network device, wherein the communication service comprises a call service or an SMS message service.

16. The method according to claim 14 or 15, wherein after outputting the paging prompt, the method further comprises:
displaying a satellite alignment page, wherein the satellite alignment page comprises an alignment prompt, and the alignment prompt is used to prompt the user to adjust the posture of the terminal to be aligned with a communication satellite of the network device.

17. The method according to claim 16, wherein after outputting the paging prompt, the method further comprises:
displaying a navigation page, wherein the navigation page comprises a map and a navigation guidance prompt, and the navigation guidance prompt is used to prompt the user to take the terminal to an open area; and
displaying the satellite alignment page specifically comprises:
displaying the satellite alignment page after detecting that the terminal is in the open area.

18. The method according to any one of claims 14 to 17, wherein after performing the communication service with the network device, the method further comprises:
outputting an adjustment prompt when detecting that the terminal does not perform signaling interaction with the network device within third preset duration, wherein the adjustment prompt is used by the user to adjust the posture and/or the use place of the terminal to connect to the network device, the third preset duration is less than timeout duration of an implicit detach timer, the implicit detach timer is used by the network device to record duration in which the terminal does not perform signaling interaction with the network device, and the network device marks the terminal as being in an unattached state if the implicit detach timer expires.

19. The method according to any one of claims 14 to 18, wherein after performing the communication service with the network device, the method further comprises:
outputting the adjustment prompt if it is detected that a distance by which the terminal moves exceeds a preset distance threshold within a time period in which the terminal does not perform signaling interaction with the network device, wherein the adjustment prompt is used by the user to adjust the posture and/or the use place of the terminal to connect to the network device.

20. The method according to claim 19, wherein the preset distance threshold is a maximum straight-line distance within coverage of one satellite beam of the network device; or
the preset distance threshold is a maximum straight-line distance within coverage of one cell of the network device.

21. The method according to any one of claims 18 to 20, wherein after outputting the adjustment prompt, the method further comprises:
initiating an attach procedure to the network device after having received the downlink broadcast signal sent by the network device.

22. The method according to any one of claims 14 to 21, wherein before receiving the enhanced paging request sent by the network device, the method further comprises:
when successfully finding a synchronization signal on a frequency correction channel FCCH at a predetermined frequency, completing time and frequency synchronization by using the synchronization signal, and recording an initial frame header edge moment of the enhanced paging request and initial receiving frequency of the enhanced paging request; and
receiving the enhanced paging request sent by the network device specifically comprises:
performing positioning on the terminal by using a received navigation signal, to determine location information of the terminal, precise positioning timing, and a pulse per second 1PPS signal;
determining a propagation delay of the enhanced paging request and a Doppler frequency shift of the enhanced paging request based on the location information of the terminal and location information of the network device;
determining a crystal oscillator time domain offset of the communication service and a crystal oscillator frequency domain offset of the communication service based on the 1PPS signal and the precise positioning timing;
correcting the initial frame header edge moment of the enhanced paging request based on the propagation delay of the enhanced paging request and the crystal oscillator time domain offset of the communication service, to obtain a corrected frame header edge moment of the enhanced paging request;
correcting the initial receiving frequency of the enhanced paging request based on the Doppler frequency shift of the enhanced paging request and the crystal oscillator frequency domain offset of the communication service, to obtain a corrected receiving frequency of the enhanced paging request; and
demodulating the enhanced paging request from a basic alerting channel based on the corrected frame header edge moment of the enhanced paging request and the corrected receiving frequency of the enhanced paging request.

23. The method according to claim 22, wherein demodulating the enhanced paging request from the basic alerting channel specifically comprises:
generating an enhanced paging request sample based on a temporary international mobile subscriber identity TMSI of the terminal and a content format of the enhanced paging request;
performing spreading, modulation, and encoding on the enhanced paging request sample to generate a symbol sequence of the enhanced paging request sample;
receiving a plurality of symbols on the basic alerting channel, wherein a quantity of the plurality of symbols is the same as a quantity of symbols in the symbol sequence of the enhanced paging request sample;
splicing the plurality of symbols into a data block in a receiving-time order; and
jointly demodulating the enhanced paging request from the data block based on the symbol sequence corresponding to the enhanced paging request sample.

24. The method according to any one of claims 14 to 23, wherein receiving the enhanced paging request sent by the network device comprises:
receiving, on the basic alerting channel BACH, the enhanced paging request sent by the network device.

25. A terminal, comprising one or more processors, one or more memories, and a transceiver, wherein the one or more memories and the transceiver are coupled to the one or more processors, the transceiver is configured to send or receive signaling, the one or more memories are configured to store a computer program, and when the one or more processors execute the computer program, the communication method according to any one of claims 14 to 24 is performed.

26. A computer-readable storage medium, wherein the computer-readable storage medium stores a computer program, and when the computer program is executed by a processor, the communication method according to any one of claims 14 to 24 is implemented.

27. A computer program product, comprising a computer program, wherein when the computer program is executed by a processor, the communication method according to any one of claims 14 to 24 is implemented.

28. A chip system, comprising a processing circuit and an interface circuit, wherein the interface circuit is configured to receive code instructions and transmit the code instructions to the processing circuit, and the processing circuit is configured to run the code instructions to perform the communication method according to any one of claims 14 to 24.
